(19) Europäisches Patentamt
European Patent Office
Office européen des brevets

(11) **EP 2 985 869 A1**

(12) **EUROPEAN PATENT APPLICATION**
published in accordance with Art. 153(4) EPC

(43) Date of publication:
**17.02.2016 Bulletin 2016/07**

(51) Int Cl.:
**H02J 50/00** (2016.01)

(21) Application number: **14772722.6**

(22) Date of filing: **03.02.2014**

(86) International application number:
**PCT/JP2014/052410**

(87) International publication number:
**WO 2014/156299 (02.10.2014 Gazette 2014/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.03.2013 JP 2013062242**

(71) Applicant: **Nitto Denko Corporation**
**Ibaraki-shi, Osaka 567-8680 (JP)**

(72) Inventors:
• **HATANAKA, Takezo**
**Ibaraki-shi**
**Osaka 567-8680 (JP)**
• **TSUDA, Hisashi**
**Ibaraki-shi**
**Osaka 567-8680 (JP)**

(74) Representative: **Müller-Boré & Partner**
**Patentanwälte PartG mbB**
**Friedenheimer Brücke 21**
**80639 München (DE)**

(54) **METHOD FOR CONTROLLING RECEIVING VOLTAGE FOR DEVICE TO BE POWERED BY WIRELESS POWER TRANSMISSION, WIRELESS POWER TRANSMISSION DEVICE ADJUSTED BY METHOD FOR CONTROLLING RECEIVING VOLTAGE, AND METHOD FOR MANUFACTURING WIRELESS POWER TRANSMISSION DEVICE**

(57) Provided are a method for controlling a receiving voltage whereby it is possible to control a receiving voltage applied to a device to be powered by adjusting the capacitance and so forth of a circuit element provided in the wireless power transmission device, a wireless power transmission device adjusted by the method for controlling a receiving voltage, and a method for manufacturing the wireless power transmission device. This method is a method for controlling a receiving voltage (VL) for a device to be powered (10) when power is supplied from a power supply module (2) that constitutes a wireless power transmission device (1) to a power receiving module (3) with a magnetic field being changed and the supplied power is fed to the device to be powered (10) connected to the power receiving module (3). The driving frequency for the power supplied to the power supply module (2) is not a resonant frequency in the power supply module (2) and the power receiving module (3) . The receiving voltage (VL) for the device to be powered (10) is adjusted by changing each of the element values, as a parameter, for a plurality of circuit elements which constitutes the power supply module (2) and the power receiving module (3).

FIG.1

EP 2 985 869 A1

**Description**

[Technical Field]

The present invention relates to a method for controlling a receiving voltage for device to be powered by wireless power transmission (hereinafter, target device), a wireless power transmission device adjusted by the method for controlling receiving voltage, and a method for manufacturing such a wireless power transmission device.

[Background]

Portable electronic devices such as laptop PCs, tablet PCs, digital cameras, mobile phones, portable gaming devices, earphone-type music players, RF headsets, hearing aids, recorders, which are portable while being used by the user are rapidly increasing in recent years. Many of these portable electronic devices have therein a rechargeable battery, which requires periodical charging. To facilitate the work for charging the rechargeable battery of an electronic device, there are an increasing number of devices for charging rechargeable batteries by using a power-supplying technology (wireless power transmission technology performing power transmission by varying the magnetic field) that performs wireless power transmission between a power-supplying device and a power-receiving device mounted in an electronic device.

For example, as a wireless power transmission technology, there have been known, for example, a technology that performs power transmission by means of electromagnetic induction between coils (e.g. see PTL 1), a technology that performs power transmission by means of resonance phenomenon (magnetic field resonant state) between resonators (coils) provided to the power-supplying device and the power-receiving device (e.g. see PTL 2).

To stably charge a rechargeable battery by using such a wireless power transmission technology, the voltage (receiving voltage) applied to a device to be powered (hereinafter, target device) including the rechargeable battery (stabilizer circuit, charging circuit, rechargeable battery, and the like) needs to be at least a drive voltage (voltage needed for performance of the device) or higher but not more than a withstand voltage of the power receiving device. When the voltage applied to the target device is lower than the drive voltage, the power receiving device will not operate. On the other hand, when the voltage applied to the target device is higher than the withstand voltage, the target device itself may breakdown.

To respond to the above requirements, a conceivable approach is to separately provide a voltage adjuster such as a booster circuit and/or a voltage down circuit to the target device, thereby adjusting the voltage applied to the power receiving device.

However, considering that the mobility, compactness, and cost cutting are required for portable electronic devices, it is inconvenient to separately provide a voltage adjuster, because doing so will increase the number of components.

In view of the above, another approach is to control the receiving voltage of the target device, without an additional device, by adjusting the capacity of the resistors, the capacitors, and the coils and the like provided in the power-supplying device and the power-receiving device in which wireless power transmission takes place.

Citation List

Patent Literatures

PTL 1: Japanese patent No. 4624768
PTL 2: Japanese Unexamined Patent Publication No. 2010-239769
PTL 3: Japanese Unexamined Patent Publication No. 2011-050140
PTL 4: Japanese Unexamined Patent Publication No. 2012-182975

Summary of Invention

Technical Problem

As described in Background Art of PTL 3 (see paragraphs [0008] to [0010]) and in the specification of a wireless power transmission system in PTL 4, it is generally known that the power transmission efficiency of wireless power supply is maximized (see paragraph [0013] of PTL 4), by adjusting the resonance frequency between resonators provided in the power-supplying device and the power-receiving device to the driving frequency of the power supplied to the power-supplying device (or adjusting the driving frequency to the resonance frequencies of the resonators provided in the power-supplying device and the power-receiving device). Such a setting is generally practiced to maximize the power transmission efficiency. Further, since the resonators of the power-supplying device and the power-receiving device each includes an LC resonance circuit, the resonance frequency between the LC resonance circuits in the power-supplying device and the power-receiving device are naturally determined to a value that matches with the driving frequency (capacities of the capacitors and/or coils: resonance condition $\omega L=1/\omega C$), in order to maximize the power transmission efficiency (see paragraph [0027] of PTL 4).

As described, to maximize the power transmission efficiency in the wireless power supply, the driving frequency of the power supplied to the power-supplying device is generally matched with the resonance frequency. However, this determines in advance the capacities of the capacitors, coils of the LC resonance circuits, and the capacities of the capacitors and the coils of the LC resonance circuits are not freely modifiable as the parameters for controlling the receiving voltage applied to the target device. In other words, the freedom in setting the capacities of the capacitors and coils of the LC resonance circuits is spoiled to control the receiving voltage applied to the target device. This also spoils the freedom in designing portable electronic devices for which the portability, compactness, and cost-efficiency.

In view of the above, it is an object of the present invention to provide a receiving voltage control method, a wireless power transmission apparatus adjusted by the receiving voltage control method, and a manufacturing method for such a wireless power transmission apparatus, which enable control of the receiving voltage applied to a device to be powered (target device) by freely adjusting the capacities of the circuit elements provided in the power-supplying device and the power-receiving device in which wireless power transmission takes place.

[Solution to Problem]

An aspect of the present invention to achieve the above object is a method for controlling a receiving voltage to a device to be powered by a wireless power transmission apparatus, wherein the wireless power transmission apparatus configured to supply power from a power-supplying module to a power-receiving module by varying a magnetic field, and supply that supplied power to the device to be powered connected to the power-receiving module, the power is supplied with a value such that a driving frequency of the power supplied to the power-supplying module does not match with a resonance frequency between the power-supplying module and the power-receiving module, and element values of a plurality of circuit elements of the power-supplying module and the power-receiving module are used as parameters and varied to adjust the receiving voltage to the device to be powered.

In the above method, the driving frequency of the power supplied to the power-supplying module is made different from the resonance frequency between the power-supplying module and the power-receiving module. This enables the element values of the plurality of circuit elements constituting the power-supplying module and a power-receiving module to be varied freely as parameters for adjusting the receiving voltage to the device to be powered (target device). Thus adjustment of the receiving voltage to the target device is possible by varying the parameters. With the receiving voltage to the target device being adjustable, it is possible to keep the receiving voltage within a range from the drive voltage of the target device, inclusive, to the withstand voltage of the same, inclusive.

As described, it is possible to freely set, as the parameters, element values of the plurality of circuit elements constituting the power-supplying module and the power-receiving module, to control the receiving voltage to the target device. This achieves a higher freedom in designing the wireless power transmission apparatus, and improves the portability, compactness, and cost-efficiency.

Another aspect of the present invention to achieve the above object is the method for controlling a receiving voltage to a device to be powered by a wireless power transmission apparatus, wherein the wireless power transmission apparatus includes a power-supplying module configured to supply power from a power-supplying module including at least a power-supplying coil and a power-supplying resonator to a power-receiving module including at least a power-receiving coil and a power-receiving resonator by means of resonance phenomenon, and supply that supplied power to the device to be powered connected to the power-receiving coil,

the power is supplied with a value such that a driving frequency of the power supplied to the power-supplying module does not match with a resonance frequency between the power-supplying module and the power-receiving module, and where a total impedance of a circuit element including a coil $L_1$ and constituting the power-supplying coil is $Z_1$, a total impedance of a circuit element including a coil $L_2$ and constituting the power-supplying resonator is $Z_2$, a total impedance of a circuit element including a coil $L_3$ and constituting the power-receiving resonator is $Z_3$, a total impedance of a circuit element including a coil $L_4$ and constituting the power-receiving coil is $Z_4$, a total load impedance of the device to be powered is $Z_L$, a mutual inductance between the coil $L_1$ of the power-supplying coil and the coil $L_2$ of the power-supplying resonator is $M_{12}$, a mutual inductance between the coil $L_2$ of the power-supplying resonator and the coil $L_3$ of the power-receiving resonator is $M_{23}$, a mutual inductance between the coil $L_3$ of the power-receiving resonator and the coil $L_4$ of the power-receiving coil is $M_{34}$, and an input current to the power-supplying coil is $I_1$, the element values of the plurality of circuit elements constituting the power-supplying coil, the power-supplying resonator, the power-receiving coil, and the power-receiving resonator, and the mutual inductances are used as the parameters and varied to control the receiving voltage $V_L$ to the device to be powered, which voltage is derived from the following equation.

$$V_L = Z_L \times \left( \frac{j\omega M_{34}}{Z_4 + Z_L} \right) \times \left( \frac{j\omega M_{23}}{Z_3 + \frac{(\omega M_{34})^2}{Z_4 + Z_L}} \right) \times \left( \frac{j\omega M_{12}}{Z_2 + \frac{(\omega M_{23})^2}{Z_3 + \frac{(\omega M_{34})^2}{Z_4 + Z_L}}} \right) I_1$$

$$M_{12} = k_{12} \sqrt{L_1 L_2} \qquad M_{23} = k_{23} \sqrt{L_2 L_3} \qquad M_{34} = k_{34} \sqrt{L_3 L_4}$$

$(k_{ij}$ is a coupling coefficient between $L_i$ and $L_j)$

The above method brings about the following advantage in relation to the method for controlling the receiving voltage to the device to be powered (target device) connected to a wireless power transmission apparatus configured to supply power from a power-supplying module comprising at least a power-supplying coil and a power-supplying resonator to a power-receiving module comprising at least a power-receiving resonator and a power-receiving coil, by means of a resonance phenomenon, and supplying that supplied power to the target device. Namely, by changing each of the parameters, the receiving voltage to the target device is adjustable. As described, it is possible to freely set, as the parameters, element values of the plurality of circuit elements constituting the power-supplying module and the power-receiving module so as to satisfy the above relational expression, to control the receiving voltage to the target device. This achieves a higher freedom in designing the wireless power transmission apparatus, and improves the portability, compactness, and cost-efficiency.

Another aspect of the present invention to achieve the above object is the above method adapted so that the receiving voltage to the device to be powered is adjusted by adjusting at least one of a coupling coefficient $k_{12}$ between the power-supplying coil and the power-supplying resonator, a coupling coefficient $k_{23}$ between the power-supplying resonator and the power-receiving resonator, and a coupling coefficient $k_{34}$ between the power-receiving resonator and the power-receiving coil.

The above method brings is advantageous in controlling the receiving voltage to the device to be powered (target device) connected to a wireless power transmission apparatus configured to supply power from a power-supplying module comprising at least a power-supplying coil and a power-supplying resonator to a power-receiving module comprising at least a power-receiving resonator and a power-receiving coil, by means of a resonance phenomenon, and supplying that supplied power to the target device. Specifically, the receiving voltage to the target device is adjustable by adjusting the values of the coupling coefficient $k_{12}$ between the power-supplying coil and the power-supplying resonator, the coupling coefficient $k_{23}$ between the power-supplying module and the power-receiving resonator, and the coupling coefficient $k_{34}$ between the power-receiving resonator and the power-receiving coil.

Another aspect of the present invention to achieve the above object is the method for controlling the receiving voltage, adapted so that the values of the coupling coefficients $k_{12}$, $k_{23}$, and $k_{34}$ are adjusted by varying at least one of a distance between the power-supplying coil and the power-supplying resonator, a distance between the power-supplying resonator and the power-receiving resonator, and a distance between power-receiving resonator and the power-receiving coil.

With the above method, the value of the coupling coefficient $k_{12}$ is varied by varying the distance between the power-supplying coil and the power-supplying resonator, the value of the coupling coefficient $k_{23}$ is varied by varying the distance between the power-supplying resonator and the power-receiving resonator, and the value of the coupling coefficient $k_{34}$ is varied by varying the distance between the power-receiving resonator and the power-receiving coil. Thus, it is possible to vary the values of coupling coefficients between coils, simply by physically varying the distance between the power-supplying coil and the power-supplying resonator, the distance between the power-supplying resonator and the power-receiving resonator, and the distance between the power-receiving resonator and the power-receiving coil. Thus, it is possible to vary the receiving voltage to the target device, simply by physically varying the distance between the power-supplying coil and the power-supplying resonator, the distance between the power-supplying resonator and the power-receiving resonator, and the distance between the power-receiving resonator and the power-receiving coil.

Another aspect of the present invention to achieve the above object is the above method adapted so that where the distance between the power-supplying resonator and the power-receiving resonator, and the distance between the power-receiving resonator and the power-receiving coil are fixed, the adjustment of the receiving voltage to the device to be powered is based on a characteristic such that the value of the coupling coefficient $k_{12}$ between the power-supplying coil and the power-supplying resonator increases with a decrease in the distance between the power-supplying coil and the power-supplying resonator, and that the receiving voltage to the device to be powered drops with an increase in the value of the coupling coefficient $k_{12}$.

With the above method, if the distance between the power-supplying resonator and the power-receiving resonator and the distance between the power-receiving resonator and the power-receiving coil are fixed, the value of the coupling coefficient $k_{12}$ between the power-supplying coil and the power-receiving resonator increases with a decrease in the distance between the power-supplying coil and the power-supplying resonator, and this increase in the coupling coefficient $k_{12}$ reduces the receiving voltage to the target device. To the contrary, by increasing the distance between the power-supplying coil and the power-supplying resonator, the value of the coupling coefficient $k_{12}$ between the power-supplying coil and the power-supplying resonator decreases, and this decrease in the coupling coefficient $K_{12}$ raises the receiving voltage to the target device rises.

With the method for controlling the receiving voltage utilizing the above characteristics, the receiving voltage to the target device is adjustable, simply by physically varying the distance between the power-supplying coil and the power-supplying resonator. In other words, the receiving voltage to the target device is adjustable without provision of an additional device in the wireless power transmission apparatus. That is to say, the receiving voltage to the target device is adjustable without increasing the number of components in the wireless power transmission apparatus.

Another aspect of the present invention to achieve the above object is the above method adapted so that where the distance between the power-supplying coil and the power-supplying resonator, and the distance between the power-supplying resonator and the power-receiving resonator are fixed, the adjustment of the receiving voltage to the device to be powered is based on a characteristic such that the value of the coupling coefficient $k_{34}$ between the power-receiving resonator and the power-receiving coil increases with a decrease in the distance between the power-receiving resonator and the power-receiving coil, and that the receiving voltage to the device to be powered rises with an increase in the value of the coupling coefficient $k_{34}$.

With the above method, if the distance between the power-supplying coil and the power-supplying resonator, and the distance between the power-supplying resonator and the power-receiving resonator are fixed, the value of the coupling coefficient $k_{34}$ between the power-receiving resonator and the power-receiving coil increases with a decrease in the distance between the power-receiving resonator and the power-receiving coil, and this increase in the coupling coefficient $k_{34}$ raises the receiving voltage to the target device. To the contrary, by increasing the distance between the power-receiving resonator and the power-receiving coil, the value of the coupling coefficient $k_{34}$ between the power-receiving resonator and the power-receiving coil decreases, and the receiving voltage to the target device drops with a decrease in the value of the coupling coefficient $k_{34}$.

With the method for controlling the receiving voltage utilizing the above characteristics, the receiving voltage to the target device is adjustable, simply by physically varying the distance between the power-receiving resonator and the power-receiving coil. In other words, the receiving voltage to the target device is adjustable without provision of an additional device in the wireless power transmission apparatus. That is to say, the receiving voltage to the target device is adjustable without increasing the number of components in the wireless power transmission apparatus.

Another aspect of the present invention to achieve the above object is the above method adapted so that the receiving voltage to the device to be powered is adjusted by adjusting at least one of values of inductances of the coil $L_1$, coil $L_2$, coil $L_3$, and the coil $L_4$.

The above method brings is advantageous in controlling the receiving voltage to the device to be powered (target device) connected to a wireless power transmission apparatus configured to supply power from a power-supplying module comprising at least a power-supplying coil and a power-supplying resonator to a power-receiving module comprising at least a power-receiving resonator and a power-receiving coil, by means of a resonance phenomenon, and supplying that supplied power to the target device. Specifically, the receiving voltage to the target device is adjustable by adjusting at least one of the values of inductances of the coil $L_1$, coil $L_2$, coil $L_3$, and the coil $L_4$.

Another aspect of the present invention to achieve the above object is the above method adapted so that where the values of inductances of the coil $L_2$, the coil $L_3$, and the coil $L_4$ are fixed, the receiving voltage to the device to be powered is adjusted based on a characteristic such that the receiving voltage to the device to be powered drops with an increase in the value of the coil $L_1$.

With the above method, when the values of inductances of the coil $L_2$, coil $L_3$, and the coil $L_4$ are fixed, the receiving voltage to the target device is lowered by increasing the value of the coil $L_1$. To the contrary, by reducing the value of the coil $L_1$, the receiving voltage to the target device is raised.

Another aspect of the present invention to achieve the above object is the above method adapted so that where the values of inductances of the coil $L_1$, the coil $L_3$, and the coil $L_4$ are fixed, the receiving voltage to the device to be powered is adjusted based on a characteristic such that the receiving voltage to the device to be powered drops with an increase in the value of the coil $L_2$.

With the above method, when the values of inductances of the coil $L_1$, coil $L_3$, and the coil $L_4$ are fixed, the receiving voltage to the target device is lowered by increasing the value of the coil $L_2$. To the contrary, by reducing the value of the coil $L_2$, the receiving voltage to the target device is raised.

Another aspect of the present invention to achieve the above object is the above method adapted so that where the values of inductances of the coil $L_1$, the coil$L_2$, and the coil $L_4$ are fixed, the receiving voltage to the device to be powered is adjusted based on a characteristic such that the receiving voltage to the device to be powered rises with an increase in the value of the coil $L_3$.

With the above method, when the values of inductances of the coil $L_1$, coil $L_2$, and the coil $L_4$ are fixed, the receiving voltage to the target device is raised by increasing the value of the coil $L_3$. To the contrary, by reducing the value of the coil $L_3$, the receiving voltage to the target device is lowered.

Another aspect of the present invention to achieve the above object is the above method adapted so that where the values of inductances of the coil $L_1$, the coil $L_2$, and the coil $L_3$ are fixed, the receiving voltage to the device to be powered is adjusted based on a characteristic such that the receiving voltage to the device to be powered rises with an increase in the value of the coil $L_4$.

With the above method, when the values of inductances of the coil $L_1$, coil $L_2$, and the coil $L_3$ are fixed, the receiving voltage to the target device is raised by increasing the value of the coil $L_4$. To the contrary, by reducing the value of the coil $L_4$, the receiving voltage to the target device is lowered.

Another aspect of the present invention to achieve the above object is the above method, including the step of varying the element values of the plurality of circuit elements constituting the power-supplying module and the power-receiving module and the mutual inductances as parameters so that a transmission characteristic with respect to a driving frequency of the power supplied to the power-supplying module has a peak occurring in a drive frequency band lower than the resonance frequency, and a peak occurring in a drive frequency band higher than the resonance frequency, wherein the driving frequency of the power supplied to the power-supplying module is within a band corresponding to the peak of the transmission characteristic occurring in the driving frequency band lower than the resonance frequency, or within a band corresponding to the peak of the transmission characteristic occurring in the driving frequency band higher than the resonance frequency.

With the method described above, when the transmission characteristic with respect to a driving frequency of the power supplied to the power-supplying module is set so as to have a peak occurring in a drive frequency band lower than a resonance frequency of the power-supplying module and the power-receiving module, and a peak occurring in a drive frequency band higher than the resonance frequency, a relatively high transmission characteristic is ensured by setting the driving frequency of the power supplied to the power-supplying module in a band corresponding to a peak value of the transmission characteristic occurring in a driving frequency band lower than the resonance frequency. Further, in this case, as the magnetic field occurring on the outer circumference side of the power-supplying module and the magnetic field occurring on the outer circumference side of the power-receiving module cancel each other out, the influence of the magnetic fields on the outer circumference sides of the power-supplying module and the power-receiving module is restrained, and the magnetic field space having a smaller magnetic field strength than a magnetic field strength in positions other than the outer circumference sides of the power-supplying module and the power-receiving module is formed. By placing, within the magnetic field space, circuits and the like which should be away from the influence of the magnetic field, it is possible to efficiently utilize a space, and downsize the wireless power transmission apparatus itself.

In the meanwhile, a relatively high transmission characteristic is ensured also by setting the driving frequency of the power supplied to the power-supplying module in a band corresponding to a peak value of the transmission characteristic occurring in a driving frequency band higher than the resonance frequency. Further, in this case, as the magnetic field occurring on the inner circumference side of the power-supplying module and the magnetic field occurring on the inner circumference side of the power-receiving module cancel each other out, the influence of the magnetic fields on the inner circumference sides of the power-supplying module and the power-receiving module is restrained, and the magnetic field space having a smaller magnetic field strength than a magnetic field strength in positions other than the inner circumference sides of the power-supplying module and the power-receiving module is formed. By placing, within the magnetic field space, circuits and the like which should be away from the influence of the magnetic field, it is possible to efficiently utilize a space, and downsize the wireless power transmission apparatus itself.

Another aspect of the present invention to achieve the above object is a wireless power transmission apparatus adjusted by the above-described method of controlling a receiving voltage described.

The above structure enables adjustment of the receiving voltage to the target device without provision of an additional device. That is to say, the receiving voltage to the target device is adjustable without increasing the number of components in the wireless power transmission apparatus.

Another aspect of the present invention to achieve the above object is a method of manufacturing a wireless power transmission apparatus capable of supplying power from a power-supplying module to a power-receiving module by varying a magnetic field, with a driving frequency of the power being different from a resonance frequency of the power-supplying module and the power-receiving module, comprising the step of adjusting a receiving voltage to a device to be powered which is connected to the power-receiving module, by varying element values of a plurality of circuit elements of the power-supplying module and the power-receiving module as parameters, the receiving voltage being applied to the device to be powered when power is transmitted to the device to be powered.

The above method enables manufacturing of a wireless power transmission apparatus, capable of adjusting the receiving voltage to the device to be powered (target device) without provision of an additional device. That is to say, it is possible to manufacture a wireless power transmission apparatus capable of adjusting the receiving voltage to the target device, without increasing the number of components in the wireless power transmission apparatus.

Advantageous Effects

There is provided a receiving voltage control method, a wireless power transmission apparatus adjusted by the receiving voltage control method, and a manufacturing method for such a wireless power transmission apparatus, which enable control of the receiving voltage applied to a device to be powered (target device) by freely adjusting the capacities of the circuit elements provided in the power-supplying device and the power-receiving device in which wireless power transmission takes place. Brief Description of Drawings

[FIG. 1] FIG. 1 is an explanatory diagram of an equivalent circuit of the wireless power transmission apparatus.
[FIG. 2] FIG. 2 is an explanatory diagram of a wireless power transmission apparatus used in Measurement Tests.
[FIG. 3] FIG. 3 is a graph indicating relation of transmission characteristic "S21" to a driving frequency.
[FIG. 4] FIG. 4 is a graph showing a relation of input impedance Zin to a driving frequency.
[FIG. 5] FIG. 5 is a graph showing measurement results related to Measurement Test 1-1.
[FIG. 6] FIG. 6 is a graph showing measurement results related to Measurement Test 1-2.
[FIG. 7] FIG. 7 is a graph showing measurement results related to Measurement Test 1-3.
[FIG. 8] FIG. 8 is a graph showing measurement results related to Measurement Test 1-4.
[FIG. 9] FIG. 9 is a graph showing a relationship between an inter coil distance and a coupling coefficient, in the wireless power transmission.
[FIG. 10] FIG. 10 is a graph showing measurement results related to Measurement Tests 2-1 to 2-4.
[FIG. 11] FIG. 11 is an explanatory diagram of a manufacturing method of a wireless power transmission apparatus.
[FIG. 12] FIG. 12 is a flowchart explaining a method for designing an RF headset and a charger, including the wireless power transmission apparatus.

Description of Embodiments

The following describes an embodiment of a method for controlling a receiving voltage for device to be powered by wireless power transmission (hereinafter, target device), a wireless power transmission device adjusted by the method for controlling receiving voltage, and a method for manufacturing such a wireless power transmission device, according to the present invention.

(Embodiment)

First, the following describes a wireless power transmission apparatus 1 of the present embodiment which realizes wireless power transmission.

(Structure of Wireless Power Transmission Apparatus 1)

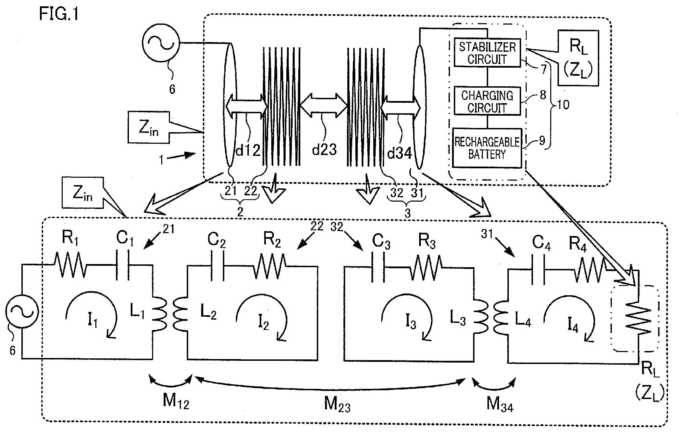

The wireless power transmission apparatus 1 includes: a power-supplying module 2 having a power-supplying coil 21 and a power-supplying resonator 22; and a power-receiving module 3 having a power-receiving coil 31 and the power-receiving resonator 32, as shown in FIG. 1. The power-supplying coil 21 of the power-supplying module 2 is connected to an AC power source 6 having an oscillation circuit configured to set the driving frequency of power supplied to the power-supplying module 2 to a predetermined value. The power-receiving coil 31 of the power-receiving module 3 is connected to a rechargeable battery 9 via a charging circuit 8 configured to prevent overcharge and a stabilizer circuit 7 configured to rectify the AC power received. It should be noted that, as shown in FIG. 1, the stabilizer circuit 7, the charging circuit 8, and the rechargeable battery 9 of the present embodiment are a device to be powered (hereinafter, referred to as target device) 10 which is the final destination of the supplied power. The target device 10 is a generic term for the entire device to which the supplied power is destined, which is connected to the power-receiving module 3.

The power-supplying coil 21 plays a role of supplying power obtained from the AC power source 6 to the power-supplying resonator 22 by means of electromagnetic induction. As shown in FIG. 1, the power-supplying coil 21 is constituted by an RLC circuit whose elements include a resistor $R_1$, a coil $L_1$, and a capacitor $C_1$. The coil $L_1$ is formed by winding once a copper wire material (coated by an insulation film) with its coil diameter set to 15 mm$\phi$. The total impedance of a circuit element constituting the power-supplying coil 21 is $Z_1$. In the present embodiment, the $Z_1$ is the total impedance of the RLC circuit (circuit element) constituting the power-supplying coil 21, which includes the resistor $R_1$, the coil $L_1$, and the capacitor $C_1$. Further, the current that flows in the power-supplying coil 21 is $I_1$. It should be noted that the current $I_1$ is the same as the input current $I_{in}$ to the wireless power transmission apparatus 1.

The power-receiving coil 31 plays roles of receiving the power having been transmitted as a magnetic field energy from the power-supplying resonator 22 to the power-receiving resonator 32, by means of electromagnetic induction, and supplying the power received to the rechargeable battery 9 via the stabilizer circuit 7 and the charging circuit 8. As shown in FIG. 1, the power-receiving coil 31, similarly to the power-supplying coil 21, is constituted by an RLC circuit whose elements include a resistor $R_4$, a coil $L_4$, and a capacitor $C_4$. The coil $L_4$ is formed by winding once a copper wire material (coated by an insulation film) with its coil diameter set to 15 mm$\phi$. The total impedance of a circuit element constituting the power-receiving coil 31 is $Z_4$. In the present embodiment, the $Z_4$ is the total impedance of the RLC circuit (circuit element) constituting the power-receiving coil 31, which includes the resistor $R_4$, the coil $L_4$, and the capacitor $C_4$. Further, while the total impedance of the target device 10 connected to the power-receiving coil 31 is $Z_L$, the total load impedance of the stabilizer circuit 7, the charging circuit 8, and the rechargeable battery 9 (target-device 10) connected to the power-receiving coil 31 is implemented in the form of a resistor $R_L$ (corresponding to $Z_L$) as shown in FIG. 1, in the present embodiment for the sake of convenience. Further, the current that flows in the power-receiving coil 31 is $I_4$.

As shown in FIG. 1, the power-supplying resonator 22 is constituted by an RLC circuit whose elements include a resistor $R_2$, a coil $L_2$, and a capacitor $C_2$. Further, as shown in FIG. 1, the power-receiving resonator 32 is constituted by an RLC circuit whose elements include a resistor $R_3$, a coil $L_3$, and a capacitor $C_3$. The power-supplying resonator 22 and the power-receiving resonator 32 each serves as a resonance circuit and plays a role of creating a magnetic field resonant state. The magnetic field resonant state (resonance phenomenon) here is a phenomenon in which two or more coils resonate with each other at a resonance frequency. The total impedance of a circuit element constituting the power-supplying resonator 22 is $Z_2$. In the present embodiment, the $Z_2$ is the total impedance of the RLC circuit (circuit element) constituting the power-supplying resonator 22, which includes the resistor $R_2$, the coil $L_2$, and the capacitor $C_2$. The total impedance of a circuit element constituting the power-receiving resonator 32 is $Z_3$. In the present embodiment, the $Z_3$ is the total impedance of the RLC circuit (circuit element) constituting the power-receiving resonator 32, which includes the resistor $R_3$, the coil $L_3$, and the capacitor $C_3$. Further, the current that flows in the power-supplying resonator 22 is $I_2$, and the current that flows in the power-receiving resonator 32 is $I_3$.

In the RLC circuit which is the resonance circuit in each of the power-supplying coil 21, the power-supplying resonator 22, the power-receiving resonator 32, the power-receiving coil 31, the resonance frequency is f which is derived from (Formula 1) below, where the inductance is L and the capacity of capacitor is C. In the present embodiment, the resonance frequency of the power-supplying coil 21, the power-supplying resonator 22, the power-receiving resonator 32, and the power-receiving coil 31 is set to 1.0 MHz.

$$f = \frac{1}{2\pi\sqrt{LC}}$$

..... (Formula 1)

The power-supplying resonator 22 and the power-receiving resonator 32 is a solenoid coil made of a copper wire material (coated by an insulation film) with its coil diameter being 15 mm$\phi$. The resonance frequency of the power-supplying resonator 22 and that of the power-receiving resonator 32 are matched with each other, as described above. The power-supplying resonator 22 and the power-receiving resonator 32 maybe a spiral coil or a solenoid coil as long as it is a resonator using a coil.

In regard to the above, the distance between the power-supplying coil 21 and the power-supplying resonator 22 is denoted as d12, the distance between the power-supplying resonator 22 and the power-receiving resonator 32 is denoted as d23, and the distance between the power-receiving resonator 32 and the power-receiving coil 31 is denoted as d34 (see FIG. 1).

Further, as shown in FIG. 1, a mutual inductance between the coil $L_1$ of the power-supplying coil 21 and the coil $L_2$ of the power-supplying resonator 22 is $M_{12}$, a mutual inductance between the coil $L_2$ of the power-supplying resonator 22 and the coil $L_3$ of the power-receiving resonator 32 is $M_{23}$, and a mutual inductance between the coil $L_3$ of the power-receiving resonator 32 and the coil $L_4$ of the power-receiving coil 31 is $M_{34}$. Further, in regard to the wireless power transmission apparatus 1, a coupling coefficient between the coil $L_1$ and the coil $L_2$ is denoted as $K_{12}$, a coupling coefficient between the coil $L_2$ and the coil $L_3$ is denoted as $K_{23}$, a coupling coefficient between the coil $L_3$ and the coil $L_4$ is denoted as $K_{34}$.

The resistance values, inductances, capacities of capacitors, and coupling coefficients $K_{12}$, $K_{23}$, and $K_{34}$ of $R_1$, $L_1$, and $C_1$ of the RLC circuit of the power-supplying coil 21, $R_2$, $L_2$, and $C_2$ of the RLC circuit of the power-supplying resonator 22, $R_3$, $L_3$, and $C_3$ of the RLC circuit of the power-receiving resonator 32, and $R_4$, $L_4$, and $C_4$ of the RLC circuit of the power-receiving coil 31 are parameters variable at the stage of designing and manufacturing, and are set so as to satisfy the relational expression of (Formula 8) which is described later (Details are provided later).

With the wireless power transmission apparatus 1, when the resonance frequency of the power-supplying resonator 22 and the resonance frequency of the power-receiving resonator 32 match with each other, a magnetic field resonant state is created between the power-supplying resonator 22 and the power-receiving resonator 32. When a magnetic field resonant state is created between the power-supplying resonator 22 and the power-receiving resonator 32 by having these resonators resonating with each other, power is transmitted from the power-supplying resonator 22 to the power-receiving resonator 32 as magnetic field energy.

(Method of Receiving Voltage to Target Device)

The following describes a method for controlling a receiving voltage to a target device (device to be powered) 10 to which power is supplied through the wireless power transmission apparatus 1 whose structure is as described above.

FIG. 1 shows at its bottom an equivalent circuit of the wireless power transmission apparatus 1 (including: the target device 10) having the structure as described above. In the equivalent circuit, the input impedance of the entire wireless power transmission apparatus 1 is Zin. Further, the impedance of the entire target device 10 is $Z_L$. The receiving voltage $V_L$ to the target device 10, which is to be controlled in the present embodiment, is expressed as the following relational expression of (Formula 2) involving the current $I_4$ and $Z_L$ flowing in the power-receiving coil 31 including the target device 10, based on the equivalent circuit of FIG. 1.

$$V_L = Z_L \times I_4$$

$$..... \text{(Formula 2)}$$

Now, the following briefly describes the need for control of the receiving voltage $V_L$. The receiving voltage $V_L$ applied to the target device 10 including the rechargeable battery 9 is required to be at least a drive voltage (the voltage needed for the performance of the device), because the target device 10 will not operate if the voltage to the target device 10 is lower than its drive voltage. On the other hand, the receiving voltage $V_L$ higher than the withstand voltage of the target device 10 may cause breakdown of the target device 10. Therefore, the receiving voltage $V_L$ is required to be equal to or lower than the withstand voltage. In view of the above, it is necessary to control the receiving voltage $V_L$ to be a least the drive voltage that allows the target device 10 to operate, but not more than the withstand voltage of the target device 10.

From the above reasons, the receiving voltage $V_L$ needs to be controlled by the current $I_4$, based on the (Formula 2). It should be noted that the target device 10 adopts components (the stabilizer circuit 7, the charging circuit 8, the rechargeable battery 9) whose impedance $Z_L$ is defined before hand, as in the present embodiment. Therefore, the value of the impedance $Z_L$ is regarded as a fixed value (this fixed value is determined by the structure and the specification of the stabilizer circuit 7, the charging circuit 8, and the rechargeable battery 9).

To express the receiving voltage $V_L$ in the (Formula 2) in the form of its relation to the input current Iin to the wireless power transmission apparatus 1, i.e., $I_1$, the relational expression of (Formula 8) is given by applying the (Formula 7) in the (Formula 2), because the relational expression of $I_1$ and $I_4$ is derived from the relational expressions (Formula 3) to (Formula 6) lead out from the equivalent circuit shown in FIG. 1.

$$E = Z_1 I_1 - j\omega M_{12} I_2$$

$$..... \text{(Formula 3)}$$

$$Z_2 I_2 - j\omega M_{12} I_1 - j\omega M_{23} I_3 = 0$$

$$\cdots\cdots \text{(Formula 4)}$$

$$Z_3 I_3 - j\omega M_{23} I_2 - j\omega M_{34} I_4 = 0$$

$$\cdots\cdots \text{(Formula 5)}$$

$$(Z_4 + Z_L) I_4 - j\omega M_{34} I_3 = 0$$

$$\cdots\cdots \text{(Formula 6)}$$

$$I_4 = \left( \frac{j\omega M_{34}}{Z_4 + Z_L} \right) \times \left( \frac{j\omega M_{23}}{Z_3 + \frac{(\omega M_{34})^2}{Z_4 + Z_L}} \right) \times \left( \frac{j\omega M_{12}}{Z_2 + \frac{(\omega M_{23})^2}{Z_3 + \frac{(\omega M_{34})^2}{Z_4 + Z_L}}} \right) I_1$$

$$\cdots\cdots \text{(Formula 7)}$$

$$V_L = Z_L \times \left( \frac{j\omega M_{34}}{Z_4 + Z_L} \right) \times \left( \frac{j\omega M_{23}}{Z_3 + \frac{(\omega M_{34})^2}{Z_4 + Z_L}} \right) \times \left( \frac{j\omega M_{12}}{Z_2 + \frac{(\omega M_{23})^2}{Z_3 + \frac{(\omega M_{34})^2}{Z_4 + Z_L}}} \right) I_1$$

$$M_{12} = k_{12}\sqrt{L_1 L_2} \qquad M_{23} = k_{23}\sqrt{L_2 L_3} \qquad M_{34} = k_{34}\sqrt{L_3 L_4}$$

$$(k_{ij} \text{ is a coupling coefficient between } L_i \text{ and } L_j)$$

$$\cdots\cdots \text{(Formula 8)}$$

Further, the impedance $Z_1$, $Z_2$, $Z_3$, $Z_4$, and $Z_L$ of the power-supplying coil 21, the power-supplying resonator 22, the power-receiving resonator 32, and the power-receiving coil 31 in the wireless power transmission apparatus 1 of the present embodiment and the target device 10 are expressed as the (Formula 9). It should be noted that, while the total impedance of the target device 10 is $Z_L$, resistor $R_L$ is used as load impedance related to the target device 10 connected to the power-receiving coil 31, for the sake of convenience.

$$Z_1 = R_1 + j\left(\omega L_1 - \frac{1}{\omega C_1}\right)$$

$$Z_2 = R_2 + j\left(\omega L_2 - \frac{1}{\omega C_2}\right)$$

$$Z_3 = R_3 + j\left(\omega L_3 - \frac{1}{\omega C_3}\right)$$

$$Z_4 = R_4 + j\left(\omega L_4 - \frac{1}{\omega C_4}\right)$$

$$Z_L = R_L$$

$$\ldots\ldots \text{(Formula 9)}$$

From the above (Formula 8) and (Formula 9), the resistance values, inductances, capacities of capacitors, and coupling coefficients $K_{12}$, $K_{23}$, and $K_{34}$ of $R_1$, $L_1$, and $C_1$ of the RLC circuit of the power-supplying coil 21, $R_2$, $L_2$, and $C_2$ of the RLC circuit of the power-supplying resonator 22, $R_3$, $L_3$, and $C_3$ of the RLC circuit of the power-receiving resonator 32, $R_4$, $L_4$, and $C_4$ of the RLC circuit of the power-receiving coil 31 are used as parameters variable at the stage of designing and manufacturing, to adjust the receiving voltage $V_L$ calculated from the above relational expression (Formula 8) to be at least the drive voltage that enables operation of the target device 10, but not more than the withstand voltage of the target device.

It is generally known that, in the above described wireless power transmission apparatus, the power transmission efficiency of the wireless power transmission is maximized by matching the driving frequency of the power supplied to the power-supplying module 2 to the resonance frequencies of the power-supplying coil 21 and the power-supplying resonator 22 of the power-supplying module 2 and the power-receiving coil 31 and the power-receiving resonator 32 of the power-receiving module 3. The driving frequency is therefore set to the resonance frequency generally to maximize the power transmission efficiency. It should be noted that the power transmission efficiency is a rate of power received by the power-receiving module 3, relative to the power supplied to the power-supplying module 2.

Thus, to maximize the power transmission efficiency in the wireless power transmission apparatus 1, it is necessary to satisfy capacity conditions and resonance conditions of the capacitors and coils ($\omega L = 1/\omega C$) so that the driving frequency matches with the resonance frequency of the RLC circuits of the power-supplying module 2 and the power-receiving module 3.

Specifically, when the receiving voltage $V_L$ satisfying the resonance condition ($\omega L = 1/\omega C$) which maximizes the power transmission efficiency in the wireless power transmission apparatus 1 to the (Formula 8), the expression will be: ($\omega L_1 - 1/\omega C_1 = 0$), ($\omega L_2 - 1/\omega C_2 = 0$), ($\omega L_3 - 1/\omega Ca = 0$), and ($\omega L_4 - 1/\omega C_4 = 0$), and the relational expression (Formula 10) is derived.

$$V_L = R_L \times \left( \frac{j\,\omega\,M_{34}}{R_4 + R_L} \right) \times \left( \frac{j\,\omega\,M_{23}}{R_3 + \dfrac{(\omega\,M_{34})^2}{R_4 + R_L}} \right) \times \left( \frac{j\,\omega\,M_{12}}{R_2 + \dfrac{(\omega\,M_{23})^2}{R_3 + \dfrac{(\omega\,M_{34})^2}{R_4 + R_L}}} \right) I_1$$

..... (Formula 10)

From the above relational expression (Formula 10), it should be understood that the resistance values such as $R_1$ of the RLC circuit of the power-supplying coil 21, $R_2$ of the RLC circuit of the power-supplying resonator 22, $R_3$ of the RLC circuit of the power-receiving resonator 32, $R_4$ of the RLC circuit of the power-receiving coil 31, and the coupling coefficients $K_{12}$, $K_{23}$, and $K_{34}$ are only the main variable parameters to adjust the value of the receiving voltage $V_L$ to be at least the drive voltage that enables operation of the target device 10 but not more than the withstand voltage of the target device 10.

When the driving frequency of the power supplied to the power-supplying module 2 is matched with the resonance frequency to maximize the power transmission efficiency in the wireless power transmission apparatus 1, the capacities of the capacitors and the coils of the power-supplying module 2 and the power-receiving module 3 are determined in advance, and it will be only the resistance values and the like of the RLC circuits which mainly enables adjustment of the value of receiving voltage $V_L$. This means that the capacities of the capacitors and coils of the RLC circuits are not freely modifiable as the parameters for controlling the receiving voltage $V_L$, which leads to a lower freedom in designing of the wireless power transmission apparatus 1.

On the other hand, by setting the driving frequency of the power supplied to the power-supplying module 2 different from the resonance frequency of the power-supplying resonator 22 of the power-supplying module 2 and the power-receiving resonator 32 of the power-receiving module 3 (i.e. $\omega L \neq 1/\omega C$), the wireless power transmission apparatus 1 of the present embodiment allows to use, as variable parameters for controlling the value of the receiving voltage $V_L$, the resistance values, inductances, capacities of capacitors, and coupling coefficients $K_{12}$, $K_{23}$, and $K_{34}$ of $R_1$, $L_1$, and $C_1$ of the RLC circuit of the power-supplying coil 21, $R_2$, $L_2$, and $C_2$ of the RLC circuit of the power-supplying resonator 22, $R_3$, $L_3$, and $C_3$ of the RLC circuit of the power-receiving resonator 32, and $R_4$, $L_4$, and $C_4$ of the RLC circuit of the power-receiving coil 31 and the like.

This, when structuring the wireless power transmission apparatus 1, allows the parameters to be varied and balanced for adjusting the value of receiving voltage $V_L$ of the target device 10, the parameters being: the resistance values, inductances, capacities of capacitors, and coupling coefficients $K_{12}$, $K_{23}$, and $K_{34}$ of $R_1$, $L_1$, and $C_1$ of the power-supplying coil 21, $R_2$, $L_2$, and $C_2$ of the power-supplying resonator 22, $R_3$, $L_3$, and $C_3$ of the power-receiving resonator 32, and $R_4$, $L_4$, and $C_4$ of the power-receiving coil 31. Therefore, it is possible to achieve a higher freedom in designing of the wireless power transmission apparatus 1, and achieve an arrangement that suits the volume, shape, and total weight of the wireless power transmission apparatus 1. That is, when compared with a typical wireless power transmission apparatus 1 in which the power transmission efficiency is maximized, the above structure increases the number of parameters for adjusting the values of the receiving voltage $V_L$ of the target device 10, and enables delicate control of the value of the receiving voltage $V_L$ of the wireless power transmission apparatus 1.

Thus, it is possible to realize a method for controlling the receiving voltage which allows adjustment of the receiving voltage $V_L$ of the target device 10 derived from (Formula 8) by balancing the parameters with one another, the parameters being: the resistance values, inductances, the capacities of capacitors, and coupling coefficients $K_{12}$, $K_{23}$, and $K_{34}$ of $R_1$, $L_1$, and $C_1$ of the power-supplying coil 21, $R_2$, $L_2$, and $C_2$ of the power-supplying resonator 22, $R_3$, $L_3$, and $C_3$ of the power-receiving resonator 32, and $R_4$, $L_4$, and $C_4$ of the power-receiving coil 31.

Therefore, with the above method, by making the driving frequency of the power supplied to the power-supplying module 2 different from the resonance frequency of the power-supplying module 2 (power-supplying coil 21, power-supplying resonator 22) and the power-receiving module 3 (power-receiving coil 31, power-supplying resonator 32), element values of the plurality of circuit elements constituting the power-supplying module 2 and the power-receiving module 3 (i.e., the resistance values, inductances, the capacities of capacitors, and coupling coefficients $K_{12}$, $K_{23}$, and $K_{34}$ of $R_1$, $L_1$, and $C_1$ of the power-supplying coil 21, $R_2$, $L_2$, and $C_2$ of the power-supplying resonator 22, $R_3$, $L_3$, and

$C_3$ of the power-receiving resonator 32, and $R_4$, $L_4$, and $C_4$ of the power-receiving coil 31, and the like) are freely modifiable as parameters to adjust the receiving voltage $V_L$ of the target device 10. Thus adjustment of the receiving voltage $V_L$ to the target device 10 is possible by varying the parameters. With the receiving voltage $V_L$ to the target device 10 being adjustable, it is possible to keep the receiving voltage $V_L$ within a range from the drive voltage of the target device, inclusive, to the withstand voltage of the same, inclusive.

As described, it is possible to freely set, as the parameters, element values of the plurality of circuit elements constituting the power-supplying module 2 and the power-receiving module 3 (i.e., the resistance values, inductances, the capacities of capacitors, and coupling coefficients $K_{12}$, $K_{23}$, and $K_{34}$ of $R_1$, $L_1$, and $C_1$ of the power-supplying coil 21, $R_2$, $L_2$, and $C_2$ of the power-supplying resonator 22, $R_3$, $L_3$, and $C_3$ of the power-receiving resonator 32, and $R_4$, $L_4$, and $C_4$ of the power-receiving coil 31, and the like), to control the receiving voltage $V_L$ to the target device 10. This achieves a higher freedom in designing the wireless power transmission apparatus 1, and improves the portability, compactness, and cost-efficiency.

The above method brings about the following advantage in relation to the method for controlling the receiving voltage $V_L$ to the target device 10 connected to a wireless power transmission apparatus 1 configured to supply power from a power-supplying module 2 comprising at least a power-supplying coil 21 and a power-supplying resonator 22 to a power-receiving module 3 comprising at least a power-receiving resonator 32 and a power-receiving coil 31, by means of a resonance phenomenon, and supplying that supplied power to the target device 10. Namely, by changing each of the parameters to satisfy the above (Formula 8), the receiving voltage $V_L$ to the target device 10 is adjustable. Further, it is possible to freely set, as the parameters, element values of the plurality of circuit elements constituting the power-supplying module 2 and the power-receiving module 3 (i.e. , the resistance values, inductances, the capacities of capacitors, and coupling coefficients $K_{12}$, $K_{23}$, and $K_{34}$ of $R_1$, $L_1$, and $C_1$ of the power-supplying coil 21, $R_2$, $L_2$, and $C_2$ of the power-supplying resonator 22, $R_3$, $L_3$, and $C_3$ of the power-receiving resonator 32, and $R_4$, $L_4$, and $C_4$ of the power-receiving coil 31, and the like) to satisfy the above relational expression (Formula 8), for the purpose of adjusting the receiving voltage $V_L$ to the target device 10. This achieves a higher freedom in designing the wireless power transmission apparatus 1, and improves the portability, compactness, and cost-efficiency.

(Control of Receiving Voltage with Coupling Coefficients)

In the above described wireless power transmission apparatus 1, the coupling coefficients $k_{12}$, $K_{23}$, and $K_{34}$ are used as main variable parameters for adjusting the receiving voltage $V_L$ to the target device 10, in cases where the power transmission efficiency in the wireless power transmission is maximized by causing the driving frequency of the power to the power-supplying module 2 to match with the resonance frequency of the power-supplying coil 21 and the power-supplying resonator 22 of the power-supplying module 2 and the power-receiving coil 31 and the power-receiving resonator 32 of the power-receiving module 3 (see Formula 10), and in cases where power is supplied to the power-supplying module 2 with the driving frequency of the power being different from the resonance frequency of the power-supplying coil 21 and the power-supplying resonator 22 of the power-supplying module 2 and the power-receiving coil 31 and the power-receiving resonator 32 of the power-receiving module 3 (see Formula 8).

(Variation in Receiving voltage $V_L$ due to Coupling Coefficients)

In view of the above, the following describes how the receiving voltage $V_L$ changes, when the coupling coefficients $K_{12}$ and $K_{34}$ in the wireless power transmission apparatus 1 are varied, with reference to Measurement Tests 1-1 to 1-4, with various conditions.

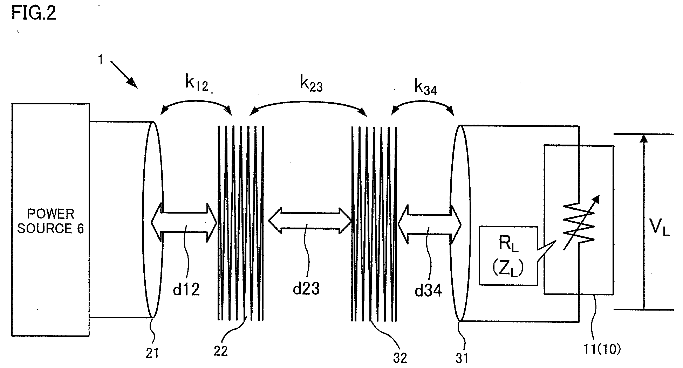

In Measurement Tests 1-1 to 1-4, the wireless power transmission apparatus 1 was connected to an oscilloscope (In the present embodiment, MSO-X3054A produced by Agilent Technologies, Inc.), and the receiving voltage $V_L$ relative to the coupling coefficient was measured (see FIG. 2) . It should be noted that, in Measurement Tests 1-1 to 1-4, a variable resistor 11 ($R_L$) was connected in place of the target device 10 including the stabilizer circuit 7, the charging circuit 8, and the rechargeable battery 9, and the receiving voltage $V_L$ was measured with conditions of Vin = 5V (max. 5V), $R_L$ = 175Ω, where Vin is an input voltage from an AC power source 6 for the wireless power transmission apparatus 1.

In the Measurement Tests are used the wireless power transmission apparatus 1 with a double-hump transmission characteristic "S21" relative to the driving frequency of the power supplied to the wireless power transmission apparatus 1.

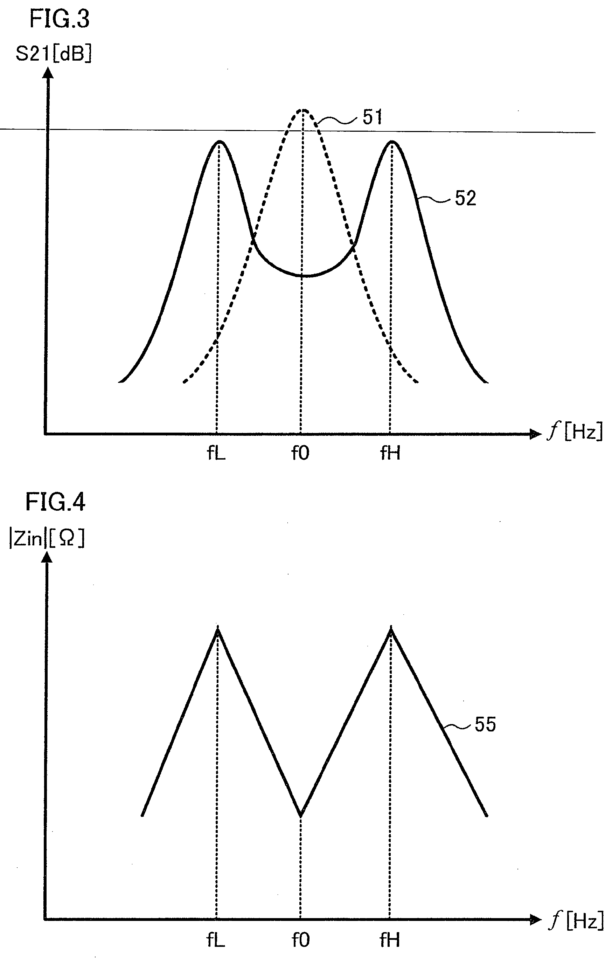

The transmission characteristic "S21" is signals measured by a network analyzer (E5061B produced by Agilent Technologies, Inc. and the like) connected to the wireless power transmission apparatus 1, and is indicated in decibel. The greater the value, it means the power transmission efficiency is high. The transmission characteristic "S21" of the wireless power transmission apparatus 1 relative to the driving frequency of the power supplied to the wireless power transmission apparatus 1 may have either single-hump or double-hump characteristic, depending on the strength of coupling (magnetic coupling) by the magnetic field between the power-supplying module 2 and the power-receiving module 3. The single-hump characteristic means the transmission characteristic "S21" relative to the driving frequency has a single peak which occurs in the resonance frequency band (fo) (See dotted line 51 FIG. 3). The double-hump characteristic on the other hand means the transmission characteristic S21 relative to the driving frequency has two peaks, one of the peaks occurring in a drive frequency band lower than the resonance frequency (fL), and the other occurring in a drive frequency band higher than the resonance frequency (fH) (See solid line 52 in FIG. 3). The double-hump characteristic, to be more specific, means that the reflection characteristic "S11" measured with the network analyzer connected to the wireless power transmission apparatus 1 has two peaks. Therefore, even if the transmission characteristic S21 relative to the driving frequency appears to have a single peak, the transmission characteristic "S21" has a double-hump characteristic if the reflection characteristic S11 measured has two peaks.

In a wireless power transmission apparatus 1 having the single-hump characteristic, the transmission characteristic "S21" is maximized (power transmission efficiency is maximized) when the driving frequency is at the resonance frequency f0, as indicated by the dotted line 51 of FIG. 3.

On the other hand, in a wireless power transmission apparatus 1 having the double-hump characteristic, the transmission characteristic "S21" is maximized in a driving frequency band (fL) lower than the resonance frequency fo, and in a driving frequency band (fH) higher than the resonance frequency fo, as indicated by the solid line 52 of FIG. 3.

It should be noted that, in general, if the distance between the power-supplying resonator and the power-receiving resonator is the same, the maximum value of the transmission characteristic "S21" having the double-hump characteristic (the value of the transmission characteristic "S21" at fL or fH) is lower than the value of the maximum value of the transmission characteristic "S21" having the single-hump characteristic (value of the transmission characteristic "S21" at fo) (See graph in FIG. 3).

Specifically, in cases of double-hump characteristic, when the driving frequency of the AC power to the power-supplying module 2 is set to the frequency fL nearby the peak on the low frequency side (inphase resonance mode), the power-supplying resonator 22 and the power-receiving resonator 32 are resonant with each other in inphase, and the current in the power-supplying resonator 22 and the current in the power-receiving resonator 32 both flow in the same direction. As the result, as shown in the graph of FIG. 3, the value of the transmission characteristic S21 is made relatively high, even if the driving frequency does not match with the resonance frequency of the power-supplying resonator 22 of the power-supplying module 2 and the power-receiving resonator 32 of the power-receiving module 3, although the value still may not be as high as that of the transmission characteristic S21 in wireless power transmission apparatuses in general aiming at maximizing the power transmission efficiency (see dotted line 51). It should be noted that the resonance state in which the current in the coil (power-supplying resonator 22) of the power-supplying module 2 and the current in the coil (power-receiving resonator 32) of the power-receiving module 3 both flow in the same direction is referred to as inphase resonance mode.

Further, in the inphase resonance mode, because the magnetic field generated on the outer circumference side of the power-supplying resonator 22 and the magnetic field generated on the outer circumference side of the power-receiving resonator 32 cancel each other out, the magnetic field spaces each having a lower magnetic field strength than the magnetic field strengths in positions not on the outer circumference sides of the power-supplying resonator 22 and the power-receiving resonator 32 (e.g. , the magnetic field strengths on the inner circumference sides of the power-supplying resonator 22 and the power-receiving resonator 32) are formed on the outer circumference sides of the power-supplying resonator 22 and the power-receiving resonator 32, as the influence of the magnetic fields is lowered. When a stabilizer circuit 7, a charging circuit 8, a rechargeable battery 9, and the like desired to have less influence of the magnetic field is placed in this magnetic field space, occurrence of Eddy Current attributed to the magnetic field is restrained or prevented. This restrains negative effects due to generation of heat.

On the other hand, in cases of double-hump characteristic, when the driving frequency of the AC power to the power-supplying module 2 is set to the frequency fH nearby the peak on the side of the high frequency side (antiphase resonance mode), the power-supplying resonator 22 and the power-receiving resonator 32 resonate with each other in antiphase, and the current in the power-supplying resonator 22 and the current in the power-receiving resonator 32 flow opposite directions to each other. As the result, as shown in the graph of FIG. 3, the value of the transmission characteristic S21 is made relatively high, even if the driving frequency does not match with the resonance frequency of the power-supplying resonator 22 of the power-supplying module 2 and the power-receiving resonator 32 of the power-receiving module 3, although the value still may not be as high as that of the transmission characteristic S21 in wireless power transmission apparatuses in general aiming at maximizing the power transmission efficiency (see dotted line 51). The resonance state in which the current in the coil (power-supplying resonator 22) of the power-supplying module 2 and the current in the coil (power-receiving resonator 32) of the power-receiving module 3 flow opposite directions to each other is referred to as antiphase resonance mode.

Further, in the antiphase resonance mode, because the magnetic field generated on the inner circumference side of the power-supplying resonator 22 and the magnetic field generated on the inner circumference side of the power-receiving resonator 32 cancel each other out, the magnetic field spaces each having a lower magnetic field strength than the magnetic field strengths in positions not on the inner circumference side of the power-supplying resonator 22

and the power-receiving resonator 32 (e.g. , the magnetic field strengths on the outer circumference side of the power-supplying resonator 22 and the power-receiving resonator 32) are formed on the outer circumference sides of the power-supplying resonator 22 and the power-receiving resonator 32, as the influence of the magnetic fields is lowered. When a stabilizer circuit 7, a charging circuit 8, a rechargeable battery 9, and the like desired to have less influence of the magnetic field is placed in this magnetic field space, occurrence of Eddy Current attributed to the magnetic field is restrained or prevented. This restrains negative effects due to generation of heat. Further, since the magnetic field space formed in this antiphase resonance mode is formed on the inner circumference side of the power-supplying resonator 22 and the power-receiving resonator 32, assembling the electronic components such as the stabilizer circuit 7, the charging circuit 8, the rechargeable battery 9, and the like within this space makes the wireless power transmission apparatus 1 itself more compact, and improves the freedom in designing.

Further, when the transmission characteristic "S21" of the wireless power transmission apparatus 1 relative to the driving frequency of the power supplied to the wireless power transmission apparatus 1 has the double-hump characteristic, and when the driving frequency of the AC power to the power-supplying module 2 is set to the inphase resonance mode (fL) or the antiphase resonance mode (fH), the input impedance $Z_{in}$ of the wireless power transmission apparatus 1 has a peak (see two mountains of the solid line 55) as shown in FIG. 4. In Measurement Tests 1-1 to 1-4, the receiving voltage $V_L$ is measured with the driving frequency (in inphase resonance mode (fL) and antiphase resonance mode (fH)) which maximizes the input impedance Zin of the wireless power transmission apparatus 1.

(Measurement Test 1-1: Variation in Receiving Voltage $V_L$ when Coupling Coefficient $k_{12}$ is Varied)

In the wireless power transmission apparatus 1 used in Measurement Test 1-1, the power-supplying coil 21 is constituted by an RLC circuit (resonating) including a resistor $R_1$, a coil $L_1$, and a capacitor $C_1$. The coil $L_1$ has its coil diameter set to 15 mm$\phi$. Similarly, the power-receiving coil 31 is constituted by an RLC circuit whose elements include a resistor $R_4$, a coil $L_4$, and a capacitor $C_4$, and the coil diameter is set to 15mm$\varphi$. Further, the power-supplying resonator 22 is constituted by an RLC circuit whose elements include a resistor $R_2$, a coil $L_2$, and a capacitor $C_2$, and adopts a solenoid coil with its coil diameter set to 15 mm$\phi$. Further, the power-receiving resonator 32 is constituted by an RLC circuit whose elements include a resistor $R_3$, a coil $L_3$, and a capacitor $C_3$, and adopts a solenoid coil with its coil diameter set to 15 mm$\phi$. The values of $R_1$, $R_2$, $R_3$, $R_4$ in the wireless power transmission apparatus 1 used in Measurement Test 1 were set to 0.8$\Omega$. Further, the values of $L_1$, $L_2$, $L_3$, $L_4$ were set to 10 $\mu$H, respectively. The resonance frequency of the power-supplying coil 21, the power-supplying resonator 22, the power-receiving resonator 32, and the power-receiving coil 31 was 1.0 MHz. It should be noted that, for the purpose of improving the power transmission efficiency in the wireless power transmission apparatusl, a magnetic sheet of 450$\mu$m in thickness is formed into a cylinder-like shape and arranged on the inner side of the power-supplying coil 21 and the coil of the power-supplying resonator 22, along the inner surface of these coils. Similarly, a magnetic sheet of 450$\mu$m in thickness is formed into a cylinder-like shape and arranged on the inner side of the power-receiving coil 32 and the coil of the power-receiving resonator 31, along the inner surfaces of these coils.

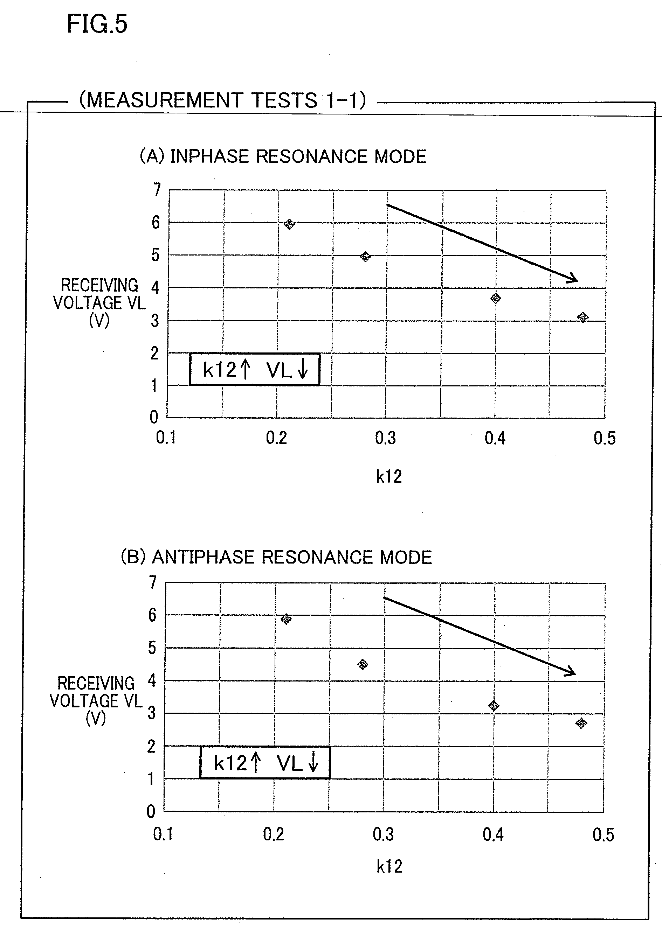

In Measurement Test 1-1, the coupling coefficients $k_{23}$ and $k_{34}$ were fixed to 0.27, and while the value of the coupling coefficient $K_{12}$ was changed among four values of 0.21, 0.28, 0.40, and 0.48, the value of the receiving voltage $V_L$ to the variable resistor 11 (set to 175$\Omega$) connected to the wireless power transmission apparatus 1 was measured (see FIG. 2, the method of adjusting the coupling coefficient is detailed later). FIG. 5 (A) shows values resulting from measurements with the driving frequency of the AC power to the power-supplying module 2 set to the frequency fL nearby the peak on the low frequency side of the double-hump characteristic (inphase resonance mode: 890kHz) . FIG. 5 (B) shows values resulting from measurements with the driving frequency of the AC power to the power-supplying module 2 set to the frequency fH nearby the peak on the high frequency side of the double-hump characteristic (antiphase resonance mode: 1170kHz).

As should be seen in the measurement results in the inphase resonance mode shown in FIG. 5 (A), when the value of the coupling coefficient $K_{12}$ is raised in a sequence of 0.21 --> 0.28 --> 0.40 --> 0.48, the value of the receiving voltage $V_L$ decreased in a sequence of 6.0 V--> 5.0 V --> 3.7 V --> 3.1 V.

As should be understood from the above, in the inphase resonance mode, the value of the receiving voltage $V_L$ to the target device 10 tends to decrease with an increase in the value of the coupling coefficient $K_{12}$. To the contrary, the value of the receiving voltage $V_L$ to the target device 10 tends to increase with a decrease in the value of the coupling coefficient $K_{12}$.

Similarly, in the measurement results in the antiphase resonance mode shown in FIG. 5 (B), when the value of the coupling coefficient $K_{12}$ is raised in a sequence of 0.21 --> 0.28 --> 0.40 --> 0.48, the value of the receiving voltage $V_L$ decreased in a sequence of 5.9 V--> 4.5 V --> 3.2 V --> 2.7 V.

As should be understood from the above, in the antiphase resonance mode, the value of the receiving voltage Vr, to the target device 10 tends to decrease with an increase in the value of the coupling coefficient $K_{12}$. To the contrary, the value of the receiving voltage $V_L$ to the target device 10 tends to increase with a decrease in the value of the coupling

coefficient $K_{12}$.

(Measurement Test 1-2: Variation in Receiving Voltage $V_L$ when Coupling Coefficient $k_{12}$ is Varied)

The wireless power transmission apparatus 1 used in Measurement Test 1-2, unlike Measurement Test 1-1, the power-supplying coil 21, the power-supplying resonator 22, the power-receiving resonator 32, and the power-receiving coil 31 are each made a pattern coil in a planner manner, instead of a solenoid shape. Specifically, an RLC circuit (with resonance) whose elements include a resistor $R_1$, a coil $L_1$, and a capacitor $C_1$ is structured, and

The coil $L_1$ is a 12-turn pattern coil with its coil diameter set to 35 mm$\phi$, which is formed by etching involving a copper foil. Similarly, the power-receiving coil 31 is constituted by an RLC circuit whose elements include a resistor $R_4$, a coil $L_4$, and a capacitor $C_4$, and the coil $L_4$ is a pattern coil similar to the power-supplying coil 21. Further, the power-supplying resonator 22 is constituted by an RLC circuit whose elements include a resistor $R_2$, a coil $L_2$, and a capacitor $C_2$. The coil $L_2$ is a 12-turn pattern coil with its coil diameter set to 35 mm$\phi$, which is formed by etching involving a copper foil. Similarly, the power-receiving resonator 32 is constituted by an RLC circuit whose elements include a resistor $R_3$, a coil $L_3$, and a capacitor $C_3$, and the coil $L_3$ is a pattern coil similar to the power-supplying resonator 22. The values of $R_1$, $R_2$, $R_3$, $R_4$ in the wireless power transmission apparatus 1 used in Measurement Test 1-2 were set to 1.5$\Omega$. Further, the values of $L_1$, $L_2$, $L_3$, $L_4$ were set to 2.5 $\mu$H. The resonance frequency of the power-supplying coil 21, the power-supplying resonator 22, the power-receiving resonator 32, and the power-receiving coil 31 was 1.0 MHz.

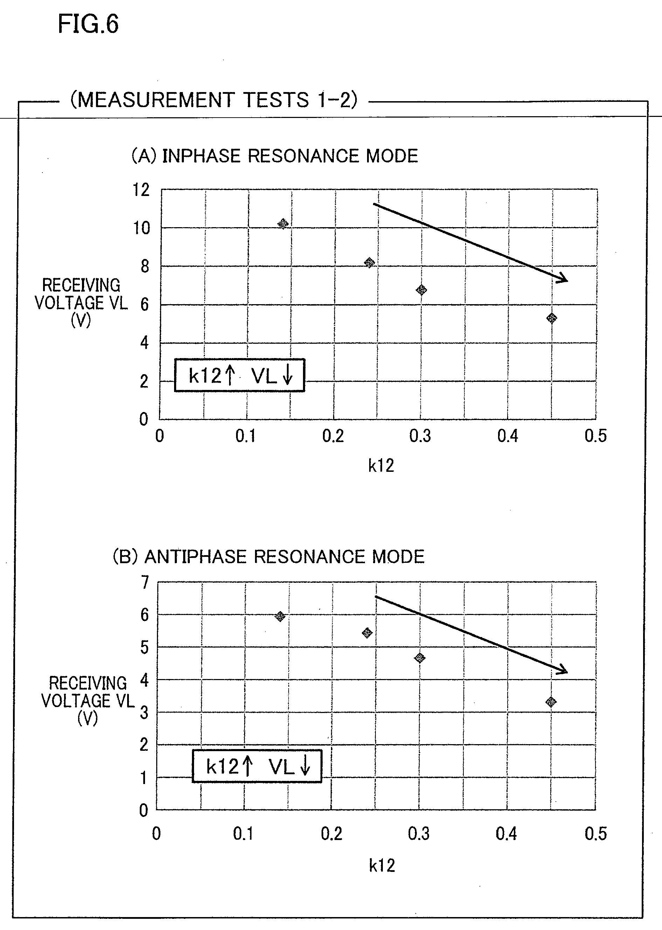

In Measurement Test 1-2, the coupling coefficients $k_{23}$ and $k_{34}$ were fixed to 0.3, and while the value of the coupling coefficient $K_{12}$ was changed among four values of 0.14, 0.24, 0.30, and 0.45, the value of the receiving voltage $V_L$ to the variable resistor 11 (set to 175$\Omega$) connected to the wireless power transmission apparatus 1 was measured (see FIG. 2). FIG. 6 (A) shows values resulting from measurements with the driving frequency of the AC power to the power-supplying module 2 set to the frequency fL nearby the peak on the low frequency side of the double-hump characteristic (inphase resonance mode: 880kHz). FIG. 6 (B) shows values resulting from measurements with the driving frequency of the AC power to the power-supplying module 2 set to the frequency fH nearby the peak on the high frequency side of the double-hump characteristic (antiphase resonance mode: 1200 kHz).

As should be seen in the measurement results in the inphase resonance mode shown in FIG. 6 (A), when the value of the coupling coefficient $K_{12}$ is raised in a sequence of 0.14 --> 0.24 --> 0.30 --> 0.45, the value of the receiving voltage $V_L$ decreased in a sequence of 10.2 V--> 8.2 V --> 6.8 V --> 5.3 V.

As should be understood from the above, in the inphase resonance mode, the value of the receiving voltage $V_L$ to the target device 10 tends to decrease with an increase in the value of the coupling coefficient $K_{12}$. To the contrary, the value of the receiving voltage $V_L$ to the target device 10 tends to increase with a decrease in the value of the coupling coefficient $K_{12}$.

Similarly, in the measurement results in the antiphase resonance mode shown in FIG. 6 (B), when the value of the coupling coefficient $K_{12}$ is raised in a sequence of 0.14 --> 0.24 --> 0.30 --> 0.45, the value of the receiving voltage $V_L$ decreased in a sequence of 5.9 V--> 5.4 V --> 4.7 V --> 3.3 V.

As should be understood from the above, in the antiphase resonance mode, the value of the receiving voltage $V_L$ to the target device 10 tends to decrease with an increase in the value of the coupling coefficient $K_{12}$. To the contrary, the value of the receiving voltage $V_L$ to the target device 10 tends to increase with a decrease in the value of the coupling coefficient $K_{12}$.

(Measurement Test 1-3: Variation in Receiving Voltage $V_L$ when Coupling Coefficient $k_{34}$ is Varied)

The wireless power transmission apparatus 1 used in Measurement Test 1-3 is the same as that used in Measurement Test 1-1, and the values of $R_1$, $R_2$, $R_3$, and $R_4$ are set to 0.8 $\Omega$ and the values of the $L_1$, $L_2$, $L_3$, and $L_4$ are set to 10$\mu$H in the wireless power transmission apparatus 1 of Measurement Test 1-3 (the same as Measurement Test 1-1). The resonance frequency of the power-supplying coil 21, the power-supplying resonator 22, the power-receiving resonator 32, and the power-receiving coil 31 was 1.0 MHz (the same as Measurement Test 1-1).

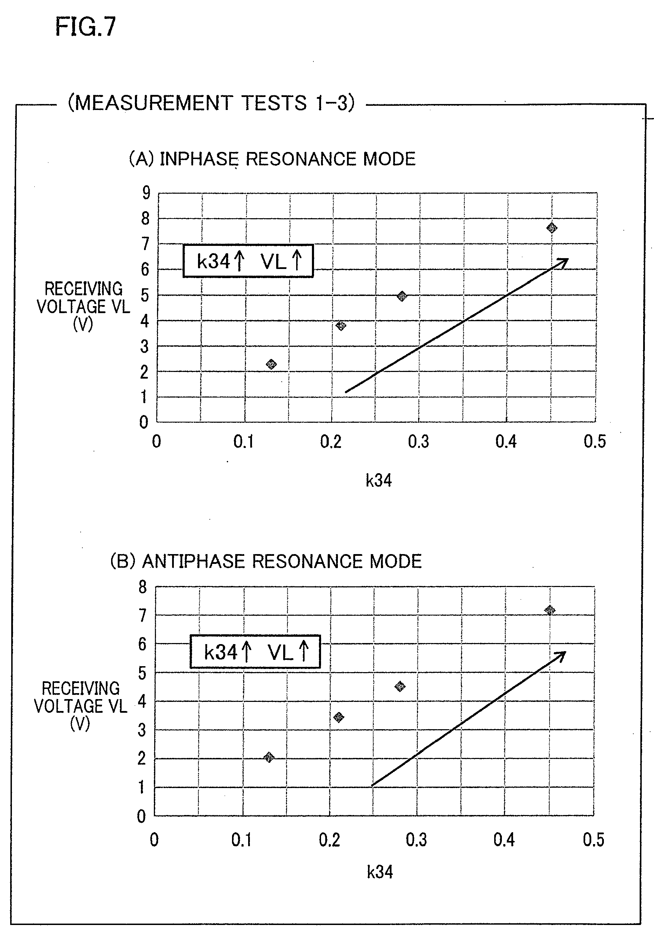

In Measurement Test 1-3, the coupling coefficients $k_{12}$ and $k_{23}$ were fixed to 0.27, and while the value of the coupling coefficient $K_{34}$ was changed among four values of 0.13, 0.21, 0.28, and 0.45, the value of the receiving voltage $V_L$ to the variable resistor 11 (set to 17$\Omega$) connected to the wireless power transmission apparatus 1 was measured (see FIG. 2). FIG. 7 (A) shows values resulting from measurements with the driving frequency of the AC power to the power-supplying module 2 set to the frequency fL nearby the peak on the low frequency side of the double-hump characteristic (inphase resonance mode: 890 kHz). FIG. 7 (B) shows values resulting from measurements with the driving frequency of the AC power to the power-supplying module 2 set to the frequency fH nearby the peak on the high frequency side of the double-hump characteristic (antiphase resonance mode: 1170 kHz).

As should be seen in the measurement results in the inphase resonance mode shown in FIG. 7 (A), when the value of the coupling coefficient $K_{34}$ is raised in a sequence of 0.13 --> 0.21 --> 0.28 --> 0.45, the value of the receiving voltage $V_L$ increased in a sequence of 2.3 V--> 3.8 V --> 5.0 V --> 7.6 V.

As should be understood from the above, in the inphase resonance mode, the value of the receiving voltage $V_L$ to the target device 10 tends to increase with an increase in the in value of the coupling coefficient $K_{34}$. To the contrary, the value of the receiving voltage $V_L$ to the target device 10 tends to decrease with a decrease in the value of the coupling coefficient $K_{34}$.

Similarly, in the measurement results in the antiphase resonance mode shown in FIG. 7 (B), when the value of the coupling coefficient $K_{34}$ is raised in a sequence of 0.13 --> 0.21 --> 0.28 --> 0.45, the value of the receiving voltage $V_L$ increased in a sequence of 2.0 V --> 3.4 V --> 4.5 V --> 7.2 V.

As should be understood from the above, in the antiphase resonance mode, the value of the receiving voltage $V_L$ to the target device 10 tends to increase with an increase in the value of the coupling coefficient $K_{34}$. To the contrary, the value of the receiving voltage $V_L$ to the target device 10 tends to decrease with a decrease in the value of the coupling coefficient $K_{34}$.

(Measurement Test 1-4: Variation in Receiving Voltage $V_L$ when Coupling Coefficient $k_{34}$ is Varied)

The wireless power transmission apparatus 1 used in Measurement Test 1-4 is the same as that used in Measurement Test 1-2, and the values of $R_1$, $R_2$, $R_3$, and $R_4$ are set to 1.5 Ω and the values of the $L_1$, $L_2$, $L_3$, and $L_4$ are set to 2.5μH in the wireless power transmission apparatus 1 of Measurement Test 1-4 (the same as Measurement Test 1-2). The resonance frequency of the power-supplying coil 21, the power-supplying resonator 22, the power-receiving resonator 32, and the power-receiving coil 31 was 1.0 MHz (the same as Measurement Test 1-2).

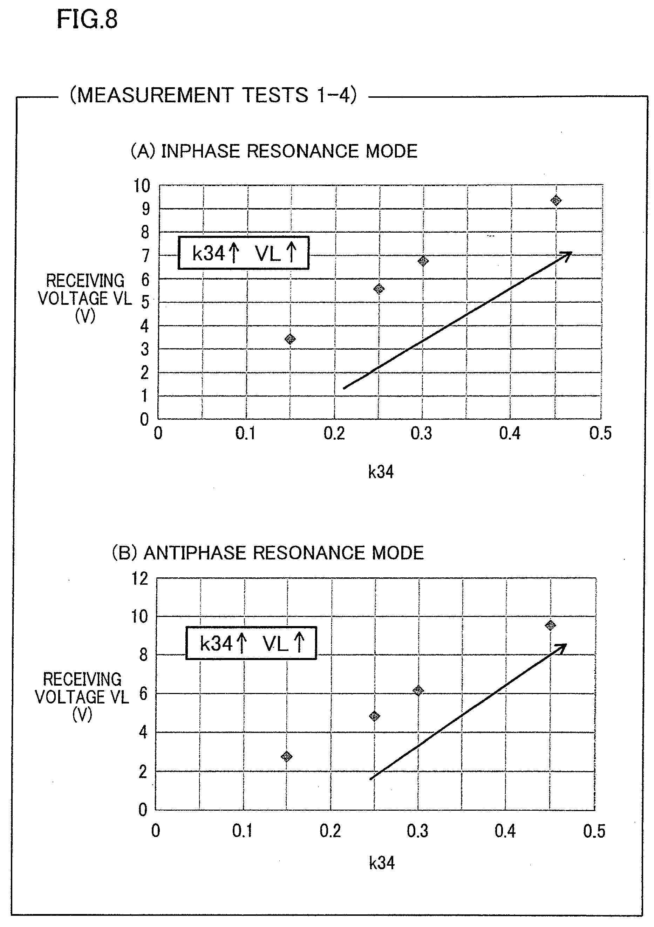

In Measurement Test 1-4, the coupling coefficients $k_{12}$ and $k_{23}$ were fixed to 0.3, and while the value of the coupling coefficient $K_{34}$ was changed among four values of 0.15, 0.25, 0.30, and 0.45, the value of the receiving voltage $V_L$ to the variable resistor 11 (set to 175Ω) connected to the wireless power transmission apparatus 1 was measured (see FIG. 2). FIG. 8 (A) shows values resulting from measurements with the driving frequency of the AC power to the power-supplying module 2 set to the frequency fL nearby the peak on the low frequency side of the double-hump characteristic (inphase resonance mode: 880kHz). FIG. 8 (B) shows values resulting from measurements with the driving frequency of the AC power to the power-supplying module 2 set to the frequency fH nearby the peak on the high frequency side of the double-hump characteristic (antiphase resonance mode: 1200 kHz).

As should be seen in the measurement results in the inphase resonance mode shown in FIG. 8 (A), when the value of the coupling coefficient $K_{34}$ is raised in a sequence of 0.15 --> 0.25 --> 0.30 --> 0.45, the value of the receiving voltage $V_L$ increased in a sequence of 3.4 V--> 5.6 V --> 6.8 V --> 9.3 V.

As should be understood from the above, in the inphase resonance mode, the value of the receiving voltage $V_L$ to the target device 10 tends to increase with an increase in the in value of the coupling coefficient $K_{34}$. To the contrary, the value of the receiving voltage $V_L$ to the target device 10 tends to decrease with a decrease in the value of the coupling coefficient $K_{34}$.

Similarly, in the measurement results in the antiphase resonance mode shown in FIG. 8 (B), when the value of the coupling coefficient $K_{34}$ is raised in a sequence of 0.15 --> 0.25 --> 0.30 --> 0.45, the value of the receiving voltage $V_L$ increased in a sequence of 2.8 V --> 4.8 V --> 6.2 V --> 9.5 V.

As should be understood from the above, in the antiphase resonance mode, the value of the receiving voltage $V_L$ to the target device 10 tends to increase with an increase in the value of the coupling coefficient $K_{34}$. To the contrary, the value of the receiving voltage $V_L$ to the target device 10 tends to decrease with a decrease in the value of the coupling coefficient $K_{34}$.

From Measurement Tests 1-1 to 1-4, it should be under stood that the receiving voltage $V_L$ to the device to be powered (target device) 10 is adjustable by adjusting a coupling coefficient $k_{12}$ between the power-supplying coil 21 and the power-supplying resonator 22, a coupling coefficient $k_{23}$ between the power-supplying resonator 22 and the power-receiving resonator 32, and a coupling coefficient $k_{34}$ between the power-receiving resonator 32 and the power-receiving coil 31, in wireless power transmission using the wireless power transmission apparatus 1.

(Method of Adjusting Coupling Coefficient)

Next, the following describes a method for adjusting coupling coefficients $k_{12}$, $k_{23}$, and $k_{34}$ which are parameters for controlling the receiving voltage $V_L$ of the wireless power transmission apparatus 1 applied to the target device 10.

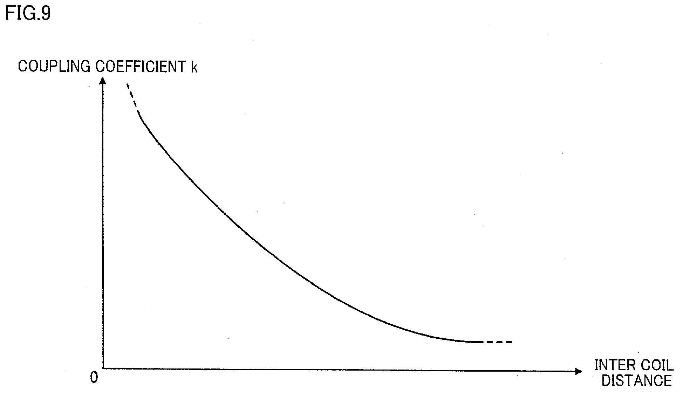

In wireless power transmission, the relation between a coupling coefficient k and a distance between a coil and another coil is typically such that the value of the coupling coefficient k increases with a decrease in (shortening of) the distance between the coil and the other coil, as shown in FIG. 9. Applying this to the wireless power transmission apparatus 1 of the present embodiment, it means reducing a distance d12 between the power-supplying coil 21 and the power-supplying resonator 22, a distance d23 between the power-supplying resonator 22 and the power-receiving resonator 32, and a distance d34 between the power-receiving resonator 32 and the power-receiving coil 31 raises the

coupling coefficient $k_{12}$ between the power-supplying coil 21 (coil $L_1$) and the power-supplying resonator 22 (coil $L_2$), the coupling coefficient $k_{23}$ between the power-supplying resonator 22 (coil $L_2$) and the power-receiving resonator 32 (coil $L_3$), and the coupling coefficient $k_{34}$ between the power-receiving resonator 32 (coil $L_3$) and the power-receiving coil 31 (coil $L_4$). To the contrary, by increasing the distance d12 between the power-supplying coil 21 and the power-supplying resonator 22, the distance d23 between the power-supplying resonator 22 and the power-receiving resonator 32, and the distance d34 between the power-receiving resonator 32 and the power-receiving coil 31, the coupling coefficient $k_{12}$ between the power-supplying coil 21 (coil $L_1$) and the power-supplying resonator 22 (coil $L_2$), the coupling coefficient $k_{23}$ between the power-supplying resonator 22 (coil $L_2$) and the power-receiving resonator 32 (coil $L_3$), and the coupling coefficient $k_{34}$ between the power-receiving resonator 32 (coil $L_3$) and the power-receiving coil 31 (coil $L_4$) are reduced.

Based on the above Measurement Tests on variation in the receiving voltage $V_L$ by the variation in the coupling coefficients and the above method for adjusting the coupling coefficients, if the distance d23 between the power-supplying resonator 22 and the power-receiving resonator 32 and the distance d34 between the power-receiving resonator 32 and the power-receiving coil 31 are fixed, the value of the coupling coefficient $k_{12}$ between the power-supplying coil 21 and the power-receiving resonator 22 increases with a decrease in the distance d12 between the power-supplying coil 21 and the power-supplying resonator 22, and this increase in the coupling coefficient $k_{12}$ reduces the receiving voltage $V_L$ to the target device 10. To the contrary, by increasing the distance d12 between the power-supplying coil 21 and the power-supplying resonator 22, the value of the coupling coefficient $k_{12}$ between the power-supplying coil 21 and the power-supplying resonator 22 decreases, and this decrease in the value of the coupling coefficient $k_{12}$ raises the receiving voltage $V_L$ to the target device 10.

Further, if the distance d12 between the power-supplying coil 21 and the power-supplying resonator 22, and the distance d23 between the power-supplying resonator 22 and the power-receiving resonator 32 are fixed, the value of the coupling coefficient $k_{34}$ between the power-receiving resonator 32 and the power-receiving coil 31 increases with a decrease in the distance d34 between the power-receiving resonator 32 and the power-receiving coil 31, and this increase in the coupling coefficient $k_{34}$ raises the receiving voltage $V_L$ to the target device 10. To the contrary, by increasing the distance d34 between the power-receiving resonator 32 and the power-receiving coil 31, the value of the coupling coefficient $k_{34}$ between the power-receiving resonator 32 and the power-receiving coil 31 decreases, and this decrease in the coupling coefficient $k_{34}$ reduces the receiving voltage $V_L$ to the target device 10.

With the method, the receiving voltage $V_L$ to the target device 10 is adjustable, simply by physically varying the distance between the power-supplying coil 21 and the power-supplying resonator 22. In other words, the receiving voltage $V_L$ to the target device 10 is adjustable without provision of an additional device in the wireless power transmission apparatus 1 (the receiving voltage $V_L$ to the target device 10 is adjustable without increasing the number of components in the wireless power transmission apparatus 1).

It should be noted that a case of varying the distance d12 between the power-supplying coil 21 and the power-supplying resonator 22 and the distance d34 between the power-receiving resonator 32 and the power-receiving coil 31 was described above as an example method for adjusting the coupling coefficients $k_{12}$, $k_{23}$, and $k_{34}$ for adjusting the receiving voltage $V_L$ of the wireless power transmission apparatus 1 applied to the target device 10. The method of adjusting the coupling coefficients $k_{12}$, $k_{23}$, and $k_{34}$ is not limited to this. For example, the following approaches are possible: disposing the power-supplying resonator 22 and the power-receiving resonator 32 so their axes do not match with each other; giving an angle to the coil surfaces of the power-supplying resonator 22 and the power-receiving resonator 32; varying the property of each element (resistor, capacitor, coil) of the power-supplying coil 21, the power-supplying resonator 22, the power-receiving resonator 32, and the power-receiving coil 31; varying the driving frequency of the AC power supplied to a power-supplying module 2.

(Control of Receiving Voltage $V_L$ by Inductance of Coil)

Another example parameter for adjusting the receiving voltage $V_L$ in the wireless power transmission apparatus 1 applied to the target device 10 is the inductance of each coil. The following describes how the receiving voltage $V_L$ changes, when the inductance of each coil in the wireless power transmission apparatus 1 is varied, with reference to Measurement Tests 2-1 to 2-4, with various conditions.

In Measurement Tests 2-1 to 2-4, the wireless power transmission apparatus 1 was connected to an oscilloscope, and the receiving voltage $V_L$ relative to variation in the inductances of the power-supplying coil 21, the power-supplying resonator 22, the power-receiving resonator 32, and the power-receiving coil 31 was measured (see FIG. 2). It should be noted that, in Measurement Tests 2-1 to 2-4, a variable resistor 11 ($R_L$) was connected in place of the target device 10 including the stabilizer circuit 7, the charging circuit 8, and the rechargeable battery 9, and the receiving voltage $V_L$ was measured with conditions of Vin = 5V (max. 5V), $R_L = 175\Omega$, where $V_{in}$ is an input voltage from an AC power source 6 for the wireless power transmission apparatus 1.

In the following Measurement Tests too, the transmission characteristic "S21" with respect to the driving frequency of power supplied to the wireless power transmission apparatus 1 has a double-hump characteristic. With this condition, the receiving voltage $V_L$ was measured for both cases where the driving frequency of the AC power supplied to the power-supplying module 2 was set in the inphase resonance mode (fL) and in the antiphase resonance mode (fH).

(Measurement Test 2-1: Variation in Receiving Voltage $V_L$ with Variation in $L_1$ of Power-Supplying Coil 21)

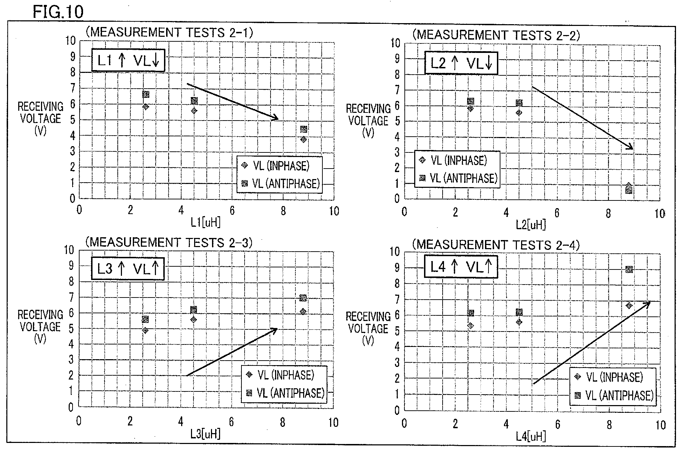

In the wireless power transmission apparatus 1 used in Measurement Test 2-1, the power-supplying coil 21 is constituted by an RLC circuit (resonating) including a resistor $R_1$, a coil $L_1$, and a capacitor $C_1$. The coil $L_1$ has its coil diameter set to 15 mm$\phi$. Similarly, the power-receiving coil 31 is constituted by an RLC circuit whose elements include a resistor $R_4$, a coil $L_4$, and a capacitor $C_4$, and the coil diameter is set to 15mm$\phi$. Further, the power-supplying resonator 22 is constituted by an RLC circuit whose elements include a resistor $R_2$, a coil $L_2$, and a capacitor $C_2$, and adopts a solenoid coil with its coil diameter set to 15 mm$\phi$. Further, the power-receiving resonator 32 is constituted by an RLC circuit whose elements include a resistor $R_3$, a coil $L_3$, and a capacitor $C_3$, and adopts a solenoid coil with its coil diameter set to 15 mm$\phi$. The values of $R_1$, $R_2$, $R_3$, $R_4$ in the wireless power transmission apparatus 1 used in Measurement Test 2-1 were set to 0.5$\Omega$. The resonance frequency of the power-supplying coil 21, the power-supplying resonator 22, the power-receiving resonator 32, and the power-receiving coil 31 was 1.0 MHz.
The coupling coefficients $k_{12}$, $k_{23}$, and $K_{34}$ were fixed to 0.27 and the value of the $L_2$, $L_3$, and $L_4$ were set 4.5 $\mu$H. With this conditions, the receiving voltage $V_L$ of the wireless power transmission apparatus 1 to the variable resistor 11 (set to 175$\Omega$) was measured for three values of $L_1$; i.e. 2.6 $\mu$H, 4.5 $\mu$H, and 8.8 $\mu$H. The
(Measurement Test 2-1) in FIG. 10 shows values resulting from measurements with the driving frequency of the AC power to the power-supplying module 2 set to: the frequency fL nearby the peak on the low frequency side of the double-hump characteristic (inphase resonance mode: 890 kHz, indicated by dark diamond symbols) and the frequency fH nearby the peak on the high frequency side of the double-hump characteristic (antiphase resonance mode: 1170 kHz, indicated by dark square symbols).
As should be seen in the measurement results in the inphase resonance mode shown in (Measurement Tests 2-1) in FIG. 10, when the value $L_1$ is raised in a sequence of 2.6 $\mu$H --> 4.5 $\mu$H --> 8.8 $\mu$H, the value of the receiving voltage $V_L$ decreases in a sequence of 5.84 V --> 5.60 V --> 3.84 V.
As should be understood from the above, in the inphase resonance mode, the value of the receiving voltage $V_L$ to the target device 10 tends to decrease with an increase in the in value of $L_1$. To the contrary, the value of the receiving voltage $V_L$ to the target device 10 tends to increase with a decrease in the value of $L_1$.
Similarly, in the measurement results in the antiphase resonance mode shown in (Measurement Tests 2-1) in FIG. 10, when the value of $L_1$ is raised in a sequence of 2.6 $\mu$H --> 4.5 $\mu$H --> 8.8 $\mu$H, the value of the receiving voltage $V_L$ decreased in a sequence of 6.64 V--> 6.24 V --> 4.48 V.
As should be understood from the above, even in the antiphase resonance mode, the value of the receiving voltage $V_L$ to the target device 10 tends to decrease with an increase in the value of $L_1$. To the contrary, the value of the receiving voltage $V_L$ to the target device 10 tends to increase with a decrease in the value of $L_1$.

(Measurement Test 2-2: Variation in Receiving Voltage $V_L$ with Variation in $L_2$ of Power-Supplying Resonator 22)

The structure of the wireless power transmission apparatus 1 used in Measurement Test 2-2 is the same as that used in Measurement Test 2-1.
In Measurement Test 2-2, the values of $L_1$, $L_3$, and $L_4$ were set to 4.5 $\mu$H. With this condition, the receiving voltage $V_L$ of the wireless power transmission apparatus 1 to the variable resistor 11 (set to 175$\Omega$) was measured for three values of $L_2$; i.e. 2.6 $\mu$H, 4.5 $\mu$H, and 8.8 $\mu$H. The (Measurement Test 2-2) in FIG. 10 shows values resulting from measurements with the driving frequency of the AC power to the power-supplying module 2 set to: the frequency fL nearby the peak on the low frequency side of the double-hump characteristic (inphase resonance mode: 890 kHz, indicated by dark diamond symbols) and the frequency fH nearby the peak on the high frequency side of the double-hump characteristic (antiphase resonance mode: 1170 kHz, indicated by dark square symbols).
As should be seen in the measurement results in the inphase resonance mode shown in (Measurement Tests 2-2) in FIG. 10, when the value $L_2$ is raised in a sequence of 2.6 $\mu$H --> 4.5 $\mu$H --> 8.8 $\mu$H, the value of the receiving voltage $V_L$ decreases in a sequence of 5.84 V --> 5.60 V --> 0.98 V.
As should be understood from the above, in the inphase resonance mode, the value of the receiving voltage $V_L$ to the target device 10 tends to decrease with an increase in the in value of $L_2$. To the contrary, the value of the receiving voltage $V_L$ to the target device 10 tends to increase with a decrease in the value of $L_2$.
Similarly, in the measurement results in the antiphase resonance mode shown in (Measurement Tests 2-2) in FIG. 10, when the value of $L_2$ is raised in a sequence of 2.6 $\mu$H --> 4.5 $\mu$H --> 8.8 $\mu$H, the value of the receiving voltage $V_L$ decreased in a sequence of 6.32 V--> 6.24 V --> 0.65 V.
As should be understood from the above, even in the antiphase resonance mode, the value of the receiving voltage $V_L$

to the target device 10 tends to decrease with an increase in the value of $L_2$. To the contrary, the value of the receiving voltage $V_L$ to the target device 10 tends to increase with a decrease in the value of $L_2$.

(Measurement Test 2-3: Variation in Receiving Voltage $V_L$ with Variation in $L_3$ of Power-Receiving Resonator 32)

The structure of the wireless power transmission apparatus 1 used in Measurement Test 2-3 is the same as that used in Measurement Test 2-1.

In Measurement Test 2-3, the values of $L_1$, $L_2$, and $L_4$ were set to 4.5 $\mu$H. With this condition, the receiving voltage $V_L$ of the wireless power transmission apparatus 1 to the variable resistor 11 (set to 175$\Omega$) was measured for three values of $L_3$; i.e. 2.6 $\mu$H, 4.5 $\mu$H, and 8.8 $\mu$H. The (Measurement Test 2-3) in FIG. 10 shows values resulting from measurements with the driving frequency of the AC power to the power-supplying module 2 set to: the frequency fL nearby the peak on the low frequency side of the double-hump characteristic (inphase resonance mode: 890 kHz, indicated by dark diamond symbols) and the frequency fH nearby the peak on the high frequency side of the double-hump characteristic (antiphase resonance mode: 1170 kHz, indicated by dark square symbols).

As should be seen in the measurement results in the inphase resonance mode shown in (Measurement Tests 2-3) in FIG. 10, when the value $L_3$ is raised in a sequence of 2.6 $\mu$H --> 4.5 $\mu$H --> 8.8 $\mu$H, the value of the receiving voltage $V_L$ increases in a sequence of 4.88 V --> 5.60 V --> 6.16 V.

As should be understood from the above, in the inphase resonance mode, the value of the receiving voltage $V_L$ to the target device 10 tends to increase with an increase in the in value of $L_3$. To the contrary, the value of the receiving voltage $V_L$ to the target device 10 tends to decrease with a decrease in the value of $L_3$.

Similarly, in the measurement results in the antiphase resonance mode shown in (Measurement Tests 2-3) in FIG. 10, when the value of $L_3$ is raised in a sequence of 2.6 $\mu$H --> 4.5 $\mu$H --> 8.8 $\mu$H, the value of the receiving voltage $V_L$ increased in a sequence of 5.60 V--> 6.24 V --> 7.04 V.

As should be understood from the above, in the antiphase resonance mode, the value of the receiving voltage $V_L$ to the target device 10 tends to increase with an increase in the value of $L_3$. To the contrary, the value of the receiving voltage $V_L$ to the target device 10 tends to decrease with a decrease in the value of $L_3$.

(Measurement Test 2-4: Variation in Receiving Voltage $V_L$ with Variation in $L_4$ of Power-Receiving Coil 31)

The structure of the wireless power transmission apparatus 1 used in Measurement Test 2-4 is the same as that used in Measurement Test 2-1.

In Measurement Test 2-4, the values of $L_1$, $L_2$, and $L_3$ were set to 4.5 $\mu$H. With this condition, the receiving voltage $V_L$ of the wireless power transmission apparatus 1 to the variable resistor 11 (set to 175$\Omega$) was measured for three values of $L_4$; i.e. 2.6 $\mu$H, 4.5 $\mu$H, and 8.8 $\mu$H. The (Measurement Test 2-4) in FIG. 10 shows values resulting from measurements with the driving frequency of the AC power to the power-supplying module 2 set to: the frequency fL nearby the peak on the low frequency side of the double-hump characteristic (inphase resonance mode: 890 kHz, indicated by dark diamond symbols) and the frequency fH nearby the peak on the high frequency side of the double-hump characteristic (antiphase resonance mode: 1170 kHz, indicated by dark square symbols).

As should be seen in the measurement results in the inphase resonance mode shown in (Measurement Tests 2-4) in FIG. 10, when the value $L_4$ is raised in a sequence of 2.6 $\mu$H --> 4.5 $\mu$H --> 8.8 $\mu$H, the value of the receiving voltage $V_L$ increases in a sequence of 5.36 V --> 5.60 V --> 6.72 V.

As should be understood from the above, in the inphase resonance mode, the value of the receiving voltage $V_L$ to the target device 10 tends to increase with an increase in the in value of $L_4$. To the contrary, the value of the receiving voltage $V_L$ to the target device 10 tends to decrease with a decrease in the value of $L_4$.

Similarly, in the measurement results in the antiphase resonance mode shown in (Measurement Tests 2-4) in FIG. 10, when the value of $L_4$ is raised in a sequence of 2.6 $\mu$H --> 4.5 $\mu$H --> 8.8 $\mu$H, the value of the receiving voltage $V_L$ increased in a sequence of 6.16 V--> 6.24 V --> 9.00 V.

As should be understood from the above, in the antiphase resonance mode, the value of the receiving voltage $V_L$ to the target device 10 tends to increase with an increase in the value of $L_4$. To the contrary, the value of the receiving voltage $V_L$ to the target device 10 tends to decrease with a decrease in the value of $L_4$.

From Measurement Tests 2-1 to 2-4, it should be under stood that the receiving voltage $V_L$ to the device to be powered (target device) 10 is adjustable by adjusting the $L_1$ of the power-supplying coil 21, the $L_2$ of the power-supplying resonator 22, the $L_3$ of the power-receiving resonator 32, and the $L_4$ of the power-receiving coil 31.

(Manufacturing Method)

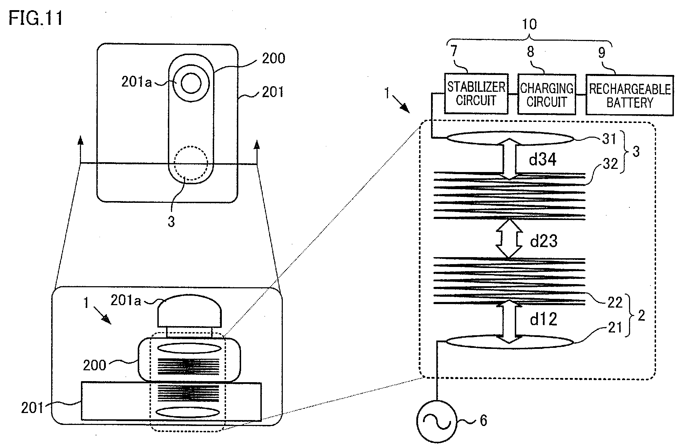

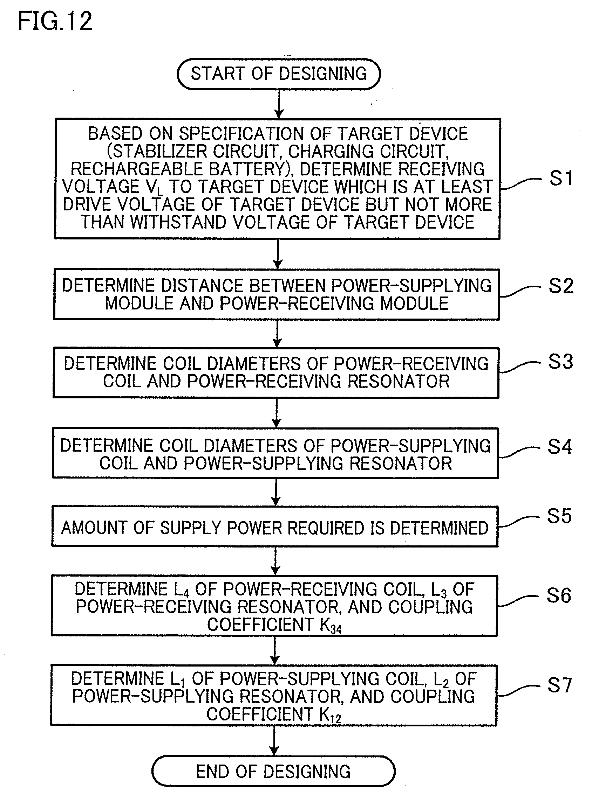

Next, the following describes with reference to FIG. 11 and FIG. 12 a design method (design process) which is a part of manufacturing process of the wireless power transmission apparatus 1. In the following description, an RF headset 200 having an earphone speaker unit 201a, and a charger 201 are described as a portable device having the wireless power transmission apparatus 1 (see FIG. 11).

The wireless power transmission apparatus 1 to be designed in the design method is mounted in an RF headset 200 and a charger 201 shown in FIG. 11, in the form of a power-receiving module 3 (a power-receiving coil 31 and a power-receiving resonator 32) and a power-supplying module 2 (a power-supplying coil 21 and a power-supplying resonator 22), respectively. For the sake of convenience, FIG. 11 illustrates the stabilizer circuit 7, the charging circuit 8, and the rechargeable battery 9 outside the power-receiving module 3; however, these are actually disposed on the inner circumference side of the power-receiving coil 31 and the solenoid coil of the power-receiving resonator 32. That is, the RF headset 200 includes the power-receiving module 3, the stabilizer circuit 7, the charging circuit 8, and the rechargeable battery 9, and the charger 201 has a power-supplying module 2. While in use, the power-supplying coil 21 of the power-supplying module 2 is connected to an AC power source 6.

(Design Method)

First, as shown in FIG. 12, based on the specification of the target device (device to be powered) 10 (the stabilizer circuit 7, the charging circuit 8, the rechargeable battery 9), the receiving voltage $V_L$ to the target device 10 which is at least the drive voltage of the target device 10 but not more than the withstand voltage of the target device 10 is determined (S1).

Next, the distance between the power-supplying module 2 and the power-receiving module 3 is determined (S2) . The distance is the distance d23 between the power-supplying resonator 22 and the power-receiving resonator 32, while the RF headset 200 having therein the power-receiving module 3 is placed on the charger 201 having therein the power-supplying module 2, i.e., during the charging state. To be more specific, the distance d23 between the power-supplying resonator 22 and the power-receiving resonator 32 is determined, taking into account the shapes and the structures of the RF headset 200 and the charger 201.

Further, based on the shape and the structure of the RF headset 200, the coil diameters of the power-receiving coil 31 in the power-receiving module 3 and the coil of the power-receiving resonator 32 are determined (S3).

Further, based on the shape and the structure of the charger 201, the coil diameters of the power-supplying coil 21 in the power-supplying module 2 and the coil of the power-supplying resonator 22 are determined (S4).

Through the steps of S2 to S4, the coupling coefficient $K_{23}$ and the power transmission efficiency between the power-supplying resonator 22 (coil $L_2$) of the wireless power transmission apparatus 1 and the power-receiving resonator 32 (coil $L_3$) are determined.

Based on the receiving voltage $V_L$ determined in S1 and on the power transmission efficiency determined through S2 to S4, the minimum power supply amount required for the power-supplying module 2 is determined (S5).

Then, the design values of the $L_4$ of the power-receiving coil 31, the $L_3$ of the power-receiving resonator 32, and the coupling coefficient $k_{34}$ are determined (S6), and the design values of the $L_1$ of the power-supplying coil 21 the $L_2$ of the power-supplying resonator 22, and the coupling coefficient $K_{12}$ are determined, taking into account the receiving voltage $V_L$ to the target device 10, the power transmission efficiency, and the minimum power supply amount required to the power-supplying module 2 (S7). Specifically, while the above (Formula 8) is satisfied, the design values of the $L_4$ of the power-receiving coil 31, the $L_3$ of the power-receiving resonator 32, and the coupling coefficient $K_{34}$, as well as the design values of the $L_1$ of the power-supplying coil 21, the $L_2$ of the power-supplying resonator 22, and the coupling coefficient $K_{12}$ are determined based on the following facts and characteristics. Namely, the design values are determined based on the characteristic such that, when the distance d23 between the power-supplying resonator 22 and the power-receiving resonator 32 and the distance d34 between the power-receiving resonator 32 and the power-receiving coil 31 are fixed, the receiving voltage $V_L$ to the target device 10 drops with a decrease in the distance d12 between the power-supplying coil 21 and the power-supplying resonator 22. Further, the design values are determined based on the characteristic such that, when the distance d12 between the power-supplying coil 21 and the power-supplying resonator 22 and the distance d23 between the power-supplying resonator 22 and the power-receiving resonator 32 are fixed, the receiving voltage $V_L$ to the target device 10 rises with a decrease in the distance d34 between the power-receiving resonator 32 and the power-receiving coil 31. Further, the design values are determined based on the fact that the receiving voltage $V_L$ to the device to the target device 10 is adjustable by adjusting the $L_1$ of the power-supplying coil 21, the $L_2$ of the power-supplying resonator 22, the $L_3$ of the power-receiving resonator 32, and the $L_4$ of the power-receiving coil 31. This way, the design values of elements structuring the wireless power transmission apparatus 1 are determined so that the receiving voltage $V_L$ to the target device 10 is at least the drive voltage of the target device 10, but not more than the withstand voltage of the target device 10.

The above-described manufacturing method of the wireless power transmission apparatus 1 including the above design method enables manufacturing of a wireless power transmission apparatus 1 that allows adjustment of the receiving voltage $V_L$ to the target device 10, without a need of an additional device. That is to say, it is possible to manufacture a wireless power transmission apparatus 1 capable of adjusting the receiving voltage $V_L$ to the target device 10, without increasing the number of components in the wireless power transmission apparatus 1.

(Other Embodiments)

Although the above description of the manufacturing method deals with an RF headset 200 as an example, the method is applicable to any devices having a rechargeable battery; e.g., tablet PCs, digital cameras, mobile phone phones, earphone-type music player, hearing aids, and sound collectors.

Further, the above description deals with a wireless power transmission apparatus 1 in which the target device 10 includes a rechargeable battery 9; however, it is possible to adopt, as the target device 10, a machine that directly consumes power for its operation.

Although the above description deals with a wireless power transmission apparatus 1 configured to perform power transmission by means of magnetic coupling using a resonance phenomenon (magnetic field resonant state) between resonators (coils) provided to a power-supplying module 2 and a power-receiving module 3, the present invention is applicable to a wireless power transmission apparatus 1 configured to perform power transmission by using electromagnetic induction between coils.

Further, although the above description assumes the wireless power transmission apparatus 1 is mounted in a portable electronic device, the use of such an apparatus is not limited to small devices. For example, with a modification to the specifications according to the required power amount, the wireless power transmission apparatus 1 is mountable to a relatively large system such as a wireless charging system in an electronic vehicle (EV), or to an even smaller device such as a wireless endoscope for medical use.

Although the above descriptions have been provided with regard to the characteristic parts so as to understand the present invention more easily, the invention is not limited to the embodiments and the examples as described above and can be applied to the other embodiments and examples, and the applicable scope should be construed as broadly as possible. Furthermore, the terms and phraseology used in the specification have been used to correctly illustrate the present invention, not to limit it. Further, it will be obvious for those skilled in the art that the other structures, systems, methods or the like are possible, within the spirit of the invention described in the present specification. Accordingly, it should be considered that claims cover equivalent structures, too, without departing from the technical idea of the present invention. In addition, it is desirable to sufficiently refer to already-disclosed documents and the like, in order to fully understand the objects and effects of the present invention.

Reference Signs List

1: Wireless Power Transmission Apparatus
2: Power-Supplying Module
3: Power-Receiving Module
6: AC power source
7: Stabilizer Circuit
8: Charging Circuit
9: Rechargeable Battery
10: Target Device (Device to be Powered)
11: Variable Resistor
21: Power-Supplying Coil
22: Power-Supplying Resonator
31: Power-Receiving Coil
32: Power-Receiving Resonator
200: RF Headset
201: Charger

**Claims**

1. A method for controlling a receiving voltage to a device to be powered by a wireless power transmission apparatus, wherein the wireless power transmission apparatus configured to supply power from a power-supplying module to a power-receiving module by varying a magnetic field, and supply that supplied power to the device to be powered connected to the power-receiving module,
the power is supplied with a value such that a driving frequency of the power supplied to the power-supplying module does not match with a resonance frequency between the power-supplying module and the power-receiving module, and

element values of a plurality of circuit elements of the power-supplying module and the power-receiving module are used as parameters and varied to adjust the receiving voltage to the device to be powered.

2. The method according to claim 1 for controlling a receiving voltage to a device to be powered by a wireless power transmission apparatus, wherein the wireless power transmission apparatus includes a power-supplying module configured to supply power from a power-supplying module including at least a power-supplying coil and a power-supplying resonator to a power-receiving module including at least a power-receiving coil and a power-receiving resonator by means of resonance phenomenon, and supply that supplied power to the device to be powered connected to the power-receiving coil,

the power is supplied with a value such that a driving frequency of the power supplied to the power-supplying module does not match with a resonance frequency between the power-supplying module and the power-receiving module, and

where a total impedance of a circuit element including a coil $L_1$ and constituting the power-supplying coil is $Z_1$,
a total impedance of a circuit element including a coil $L_2$ and constituting the power-supplying resonator is $Z_2$,
a total impedance of a circuit element including a coil $L_3$ and constituting the power-receiving resonator is $Z_3$,
a total impedance of a circuit element including a coil $L_4$ and constituting the power-receiving coil is $Z_4$,
a total load impedance of the device to be powered is $Z_L$, a mutual inductance between the coil $L_1$ of the power-supplying coil and the coil $L_2$ of the power-supplying resonator is $M_{12}$,
a mutual inductance between the coil $L_2$ of the power-supplying resonator and the coil $L_3$ of the power-receiving resonator is $M_{23}$,
a mutual inductance between the coil $L_3$ of the power-receiving resonator and the coil $L_4$ of the power-receiving coil is $M_{34}$, and
an input current to the power-supplying coil is $I_1$,
the element values of the plurality of circuit elements constituting the power-supplying coil, the power-supplying resonator, the power-receiving coil, and the power-receiving resonator, and the mutual inductances are used as the parameters and varied to control the receiving voltage $V_L$ to the device to be powered, which voltage is derived from the following equation.

$$V_L = Z_L \times \left( \frac{j\omega M_{34}}{Z_4 + Z_L} \right) \times \left( \frac{j\omega M_{23}}{Z_3 + \frac{(\omega M_{34})^2}{Z_4 + Z_L}} \right) \times \left( \frac{j\omega M_{12}}{Z_2 + \frac{(\omega M_{23})^2}{Z_3 + \frac{(\omega M_{34})^2}{Z_4 + Z_L}}} \right) I_1$$

$$M_{12} = k_{12}\sqrt{L_1 L_2} \qquad M_{23} = k_{23}\sqrt{L_2 L_3} \qquad M_{34} = k_{34}\sqrt{L_3 L_4}$$

$(k_{ij}$ *is a coupling coefficient between* $L_i$ *and* $L_j)$

3. The method according to claim 2, wherein the receiving voltage to the device to be powered is adjusted by adjusting at least one of a coupling coefficient $k_{12}$ between the power-supplying coil and the power-supplying resonator, a coupling coefficient $k_{23}$ between the power-supplying resonator and the power-receiving resonator, and a coupling coefficient $k_{34}$ between the power-receiving resonator and the power-receiving coil.

4. The method according to claim 3, wherein the values of the coupling coefficients $k_{12}$, $k_{23}$, and $k_{34}$ are adjusted by varying at least one of a distance between the power-supplying coil and the power-supplying resonator, a distance between the power-supplying resonator and the power-receiving resonator, and a distance between power-receiving resonator and the power-receiving coil.

5. The method according to claim 4 , wherein, where the distance between the power-supplying resonator and the power-receiving resonator, and the distance between the power-receiving resonator and the power-receiving coil are fixed,
the adjustment of the receiving voltage to the device to be powered is based on a characteristic such that
the value of the coupling coefficient $k_{12}$ between the power-supplying coil and the power-supplying resonator increases with a decrease in the distance between the power-supplying coil and the power-supplying resonator, and that the receiving voltage to the device to be powered drops with an increase in the coupling coefficient $k_{12}$.

6. The method according to claim 4, wherein, where the distance between the power-supplying coil and the power-supplying resonator, and the distance between the power-supplying resonator and the power-receiving resonator are fixed,
the adjustment of the receiving voltage to the device to be powered is based on a characteristic such that
the value of the coupling coefficient $k_{34}$ between the power-receiving resonator and the power-receiving coil increases with a decrease in the distance between the power-receiving resonator and the power-receiving coil, and that the receiving voltage to the device to be powered rises with an increase in the value of the coupling coefficient $k_{34}$.

7. The method according to claim 2, wherein the receiving voltage to the device to be powered is adjusted by adjusting at least one of values of inductances of the coil $L_1$, the coil $L_2$, the coil $L_3$, and the coil $L_4$.

8. The method according to claim 7, wherein, where the inductances of the coil L2, the coil L3, and the coil L4 are fixed,
the adjustment of the receiving voltage to the device to be powered is based on a characteristic such that
the receiving voltage to the device to be powered drops with an increase in the value of the coil $L_1$.

9. The method according to claim 7, wherein, where the inductances of the coil L1, the coil L3, and the coil L4 are fixed,
the adjustment of the receiving voltage to the device to be powered is based on a characteristic such that
the receiving voltage to the device to be powered drops with an increase in the value of the coil $L_2$.

10. The method according to claim 7, wherein, where the inductances of the coil L1, coil L2, and coil L4 are fixed,
the adjustment of the receiving voltage to the device to be powered is based on a characteristic such that
the receiving voltage to the device to be powered rises with an increase in the value of the coil $L_3$.

11. The method according to claim 7, wherein, where the inductances of the coil L1, the coil L2, and the coil L3 are fixed,
the adjustment of the receiving voltage to the device to be powered is based on a characteristic such that
the receiving voltage to the device to be powered rises with an increase in the value of the coil $L_4$.

12. The method according to any one of claims 1 to 11, wherein the element values of the plurality of circuit elements constituting the power-supplying module and the power-receiving module and the mutual inductances are varied as parameters so that a transmission characteristic with respect to a driving frequency of the power supplied to the power-supplying module has a peak occurring in a drive frequency band lower than the resonance frequency, and a peak occurring in a drive frequency band higher than the resonance frequency, and
wherein the driving frequency of the power supplied to the power-supplying module is within a band corresponding to the peak of the transmission characteristic occurring in the driving frequency band lower than the resonance frequency, or within a band corresponding to the peak of the transmission characteristic occurring in the driving frequency band higher than the resonance frequency.

13. A wireless power transmission apparatus adjusted by the above-described method according to any one of claims 1 to 12 for controlling a receiving voltage described.

14. A method of manufacturing a wireless power transmission apparatus capable of supplying power from a power-supplying module to a power-receiving module by varying a magnetic field, with a driving frequency of the power being different from a resonance frequency between the power-supplying module and the power-receiving module, comprising the step of
adjusting a receiving voltage to a device to be powered which is connected to the power-receiving module, by varying element values of a plurality of circuit elements of the power-supplying module and the power-receiving module as parameters, the receiving voltage being applied to the device to be powered when power is transmitted to the device to be powered.

FIG.1

FIG.2

FIG.3

S21[dB]

51

52

fL    f0    fH    $f$ [Hz]

FIG.4

|Zin|[Ω]

55

fL    f0    fH    $f$ [Hz]

# FIG.5

(MEASUREMENT TESTS 1-1)

(A) INPHASE RESONANCE MODE

(B) ANTIPHASE RESONANCE MODE

## FIG.6

(MEASUREMENT TESTS 1-2)

(A) INPHASE RESONANCE MODE

RECEIVING VOLTAGE VL (V)

k12↑ VL↓

k12

(B) ANTIPHASE RESONANCE MODE

RECEIVING VOLTAGE VL (V)

k12↑ VL↓

k12

## FIG.7

(MEASUREMENT TESTS 1-3)

(A) INPHASE RESONANCE MODE

RECEIVING VOLTAGE VL (V)

k34↑ VL↑

k34

(B) ANTIPHASE RESONANCE MODE

RECEIVING VOLTAGE VL (V)

k34↑ VL↑

k34

# FIG.8

(MEASUREMENT TESTS 1-4)

### (A) INPHASE RESONANCE MODE

k34↑ VL↑

RECEIVING VOLTAGE VL (V)

k34

### (B) ANTIPHASE RESONANCE MODE

k34↑ VL↑

RECEIVING VOLTAGE VL (V)

k34

FIG.9

FIG.10

(MEASUREMENT TESTS 2-1)

L1 ↑ VL↓

RECEIVING
VOLTAGE
(V)

◆ VL (INPHASE)
▩ VL (ANTIPHASE)

L1[uH]

(MEASUREMENT TESTS 2-2)

L2 ↑ VL↓

RECEIVING
VOLTAGE
(V)

◆ VL (INPHASE)
▩ VL (ANTIPHASE)

L2[uH]

(MEASUREMENT TESTS 2-3)

L3 ↑ VL↑

RECEIVING
VOLTAGE
(V)

◆ VL (INPHASE)
▩ VL (ANTIPHASE)

L3[uH]

(MEASUREMENT TESTS 2-4)

L4 ↑ VL↑

RECEIVING
VOLTAGE
(V)

◆ VL (INPHASE)
▩ VL (ANTIPHASE)

L4[uH]

FIG.11

# FIG.12

```
┌─────────────────────────┐
│    START OF DESIGNING    │
└─────────────────────────┘
              │
              ▼
┌─────────────────────────────────────────────┐
│ BASED ON SPECIFICATION OF TARGET DEVICE       │
│ (STABILIZER CIRCUIT, CHARGING CIRCUIT,        │
│ RECHARGEABLE BATTERY), DETERMINE RECEIVING    │── S1
│ VOLTAGE $V_L$ TO TARGET DEVICE WHICH IS AT LEAST│
│ DRIVE VOLTAGE OF TARGET DEVICE BUT NOT MORE    │
│ THAN WITHSTAND VOLTAGE OF TARGET DEVICE        │
└─────────────────────────────────────────────┘
              │
              ▼
┌─────────────────────────────────────────────┐
│ DETERMINE DISTANCE BETWEEN POWER-SUPPLYING     │── S2
│ MODULE AND POWER-RECEIVING MODULE              │
└─────────────────────────────────────────────┘
              │
              ▼
┌─────────────────────────────────────────────┐
│ DETERMINE COIL DIAMETERS OF POWER-RECEIVING    │── S3
│ COIL AND POWER-RECEIVING RESONATOR             │
└─────────────────────────────────────────────┘
              │
              ▼
┌─────────────────────────────────────────────┐
│ DETERMINE COIL DIAMETERS OF POWER-SUPPLYING    │── S4
│ COIL AND POWER-SUPPLYING RESONATOR             │
└─────────────────────────────────────────────┘
              │
              ▼
┌─────────────────────────────────────────────┐
│ AMOUNT OF SUPPLY POWER REQUIRED IS DETERMINED  │── S5
└─────────────────────────────────────────────┘
              │
              ▼
┌─────────────────────────────────────────────┐
│ DETERMINE $L_4$ OF POWER-RECEIVING COIL, $L_3$ OF│── S6
│ POWER-RECEIVING RESONATOR, AND COUPLING        │
│ COEFFICIENT $K_{34}$                            │
└─────────────────────────────────────────────┘
              │
              ▼
┌─────────────────────────────────────────────┐
│ DETERMINE $L_1$ OF POWER-SUPPLYING COIL, $L_2$ OF│── S7
│ POWER-SUPPLYING RESONATOR, AND COUPLING        │
│ COEFFICIENT $K_{12}$                            │
└─────────────────────────────────────────────┘
              │
              ▼
┌─────────────────────────┐
│     END OF DESIGNING     │
└─────────────────────────┘
```

## INTERNATIONAL SEARCH REPORT

| International application No. |
| --- |
| PCT/JP2014/052410 |

### A. CLASSIFICATION OF SUBJECT MATTER
*H02J17/00*(2006.01)i

According to International Patent Classification (IPC) or to both national classification and IPC

### B. FIELDS SEARCHED

Minimum documentation searched (classification system followed by classification symbols)
H02J17/00, H02J7/00

Documentation searched other than minimum documentation to the extent that such documents are included in the fields searched

| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | WO 2011/065732 A2 (SAMSUNG ELECTRONICS CO., LTD.), 03 June 2011 (03.06.2011), [59] to [65], [71], [73], [74], [78] to [82]; fig. 6, 9 & JP 2013-512656 A & US 2011/0127848 A1 & EP 2507893 A & KR 10-2011-0060795 A & CN 102640394 A | 1-14 |
| Y | JP 2012-182980 A (TDK Corp.), 20 September 2012 (20.09.2012), paragraphs [0004], [0005], [0021] to [0025]; fig. 1 & US 2012/0223587 A1 | 1-14 |

[×] Further documents are listed in the continuation of Box C.    [ ] See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 26 March, 2014 (26.03.14) | 08 April, 2014 (08.04.14) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
| --- |
| PCT/JP2014/052410 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2011-142769 A  (Toyota Central Research and Development Laboratories, Inc.), 21 July 2011 (21.07.2011), entire text; all drawings (Family: none) | 1-14 |
| A | JP 2009-106136 A  (Toyota Motor Corp.), 14 May 2009 (14.05.2009), entire text; all drawings & US 2010/0225271 A1      & EP 2196351 A1 & WO 2009/054221 A1      & CN 101835653 A & RU 2428329 C              & BRA 0820443 A2 | 1-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4624768 B
- JP 2010239769 A
- JP 2011050140 A
- JP 2012182975 A